# EUROPEAN PATENT APPLICATION

(11) **EP 4 429 121 A1**
(43) Date of publication of application: **11.09.2024**
(21) Application number: 23161089.0
(22) Date of filing: 10.03.2023
(51) Int. Cl.: H04B 1/3822, G01S 13/00

(54) **APPARATUS FOR PROCESSING SIGNALS, METHOD OF PROCESSING SIGNALS, VEHICLE COMPRISING AN APPARATUS FOR PROCESSING SIGNALS**

(71) Applicant: Robert Bosch GmbH, 70442 Stuttgart (DE)
(72) Inventor: Schwarzmeier, Andre, 72764 Reutlingen (DE); Hassan, Khaled Shawky, 31157 Sarstedt (DE); Stark, Maximilian, 20249 Hamburg (DE)

(57) **Abstract**

An apparatus for processing signals, for example signals associated with at least one of communication and sensing, the apparatus comprising: a first signal processing stage configured to process signals associated with communication, a second signal processing stage configured to process signals associated with sensing, and at least one common radio frequency, RF, processing stage for processing RF signals associated with at least one of communication and sensing.

## Description

### Technical Field

The disclosure relates to an apparatus for processing signals.

The disclosure further relates to a method of processing signals.

The disclosure further relates to a vehicle comprising at least one apparatus for processing signals.

### Summary

Exemplary embodiments relate to an apparatus for processing signals, for example signals associated with at least one of communication and sensing, the apparatus comprising: a first signal processing stage configured to process signals associated with communication, a second signal processing stage configured to process signals associated with sensing, and at least one common radio frequency, RF, processing stage for processing RF signals associated with at least one of communication and sensing.

In some exemplary embodiments, the at least one common RF processing stage is configured to process a) both first RF signals, which are associated with, e.g. usable for, communication, and second RF signals, which are associated with, e.g. usable for, sensing, and/or b) third RF signals, which are associated with, e.g. usable for, both communication and sensing.

In some exemplary embodiments, the at least one common RF processing stage is configured to process the first RF signals and the second RF signals in at least one of: A) an at least partly temporally overlapping fashion, for example simultaneously, B) in a time-multiplexed fashion, C) in a frequency-multiplexed fashion.

In some exemplary embodiments, the communication comprises at least one of: a) vehicle-to-everything, V2X, communication, for example based on and/or compatible with at least one 3GPP standard of the fifth generation, 5G, or sixth generation, 6G, for example at least one of a1) vehicle-to-infrastructure, V2I, communication, a2) vehicle-to-network, V2N, communication, a3) vehicle-to-device, V2D, communication, a4) vehicle-to-pedestrian, V2P, communication.

In some exemplary embodiments, the sensing comprises at least one of: a) determining, e.g. estimating, a location of an object, b) determining, e.g. estimating, a velocity of an object.

In some exemplary embodiments, the sensing can e.g. be performed by using RADAR signals or a RADAR technique, respectively.

In some exemplary embodiments, at least two elements of the a) first signal processing stage, b) the second signal processing stage and the c) at least one common RF processing stage are arranged in a same first module, for example within a same first system on chip (SoC).

In some exemplary embodiments, the first signal processing stage and the second signal processing stage are arranged in the same first module, for example within the same first system on chip, wherein, for example, the at least one common RF processing stage is arranged in a second module, for example target system or part of a target system (e.g., a vehicle), wherein, for example, the second module, is different from the first module, for example the first system on chip.

In some exemplary embodiments, more than one common RF processing stage for processing RF signals associated with communication and sensing is provided, e.g. two or more common RF processing stages.

In some exemplary embodiments, e.g. more than six common RF processing stages may be used.

In some exemplary embodiments, the apparatus comprises a control unit, for example an orchestration unit, configured to at least temporarily control at least one component of at least one of: a) the first signal processing stage, b) the second signal processing stage, c) the at least one common RF processing stage.

In some exemplary embodiments, the first signal processing stage comprises at least one of: a) a, for example vehicle-to-everything, V2X, communication layer unit configured to process information associated with at least one of a1) a control plane, for example a V2X communication control plane, a2) a user plane, for example a V2X communication user plane, b) a processing unit configured to process at least one of: b1) information associated with a radio resource control, RRC, b2) information associated with a non-access stratum, NAS, c) a processing unit configured to process information associated with data that is associated with a or the user plane, d) a processing unit configured to process information associated with a packet data convergence protocol, e) a processing unit configured to process information associated with a radio link control, RLC, f) a processing unit configured to process information associated with a medium access control, MAC, g) a processing unit configured to process information associated with a physical layer, PHY, wherein, for example, the processing unit configured to process information associated with the physical layer comprises at least one of: g1) a primary physical layer processing stage configured to perform higher physical layer functions, g2) a secondary physical layer processing stage configured to perform lower physical layer functions, e.g., with respect to the higher physical layer functions of the primary physical layer processing stage, e.g. Fast Fourier Transforms, h) a processing unit configured to perform at least one of h1) analog-to-digital conversion, ADC, h2) digital-to-analog conversion, DAC.

In some exemplary embodiments, the second signal processing stage comprises at least one of: a) a processing unit configured to perform at least one of a1) RADAR control (e.g., control of at least one RADAR function) and a2) target tracking, b) a processing unit configured to perform at least one of b1) higher physical layer RADAR functions, b2) RADAR transceiver functions, b3) RADAR timing control, b4) RADAR detection, c) a processing unit configured to perform lower physical layer RADAR functions, e.g., with respect to the higher physical layer RADAR functions, d) a processing unit configured to perform at least one of d1) analog-to-digital conversion, ADC, d2) digital-to-analog conversion, DAC.

In some exemplary embodiments, the at least one common RF processing stage comprises at least one of: a) a common RF processing unit configured to process a1) both first, e.g. the first, RF signals, which are associated with the communication, and second, e.g. the second, RF signals, which are associated with the sensing, and/or a2) third, e.g. the third, RF signals, which are associated both with the communication and the sensing, b) a processing unit configured to perform at least one of b1) analog-to-digital conversion, ADC, of at least one analog signal associated with at least one of the communication and the sensing, b2) digital-to-analog conversion, DAC, of at least one digital signal associated with at least one of the communication and the sensing, c) a processing unit configured to perform first physical layer functions, e.g. lower physical layer functions such as e.g. Fast Fourier Transformation, for signals associated with at least one of the communication and the sensing, d) a processing unit configured to perform physical layer functions, e.g. higher physical layer functions, e.g. as compared to the lower physical layer functions, for signals associated with at least one of the communication and the sensing, e) a processing unit configured to perform medium access layer functions, e.g. lower medium access layer functions, for signals associated with at least one of the communication and the sensing.

In some exemplary embodiments, the apparatus is configured to process a first signal, e.g. waveform, for the communication, wherein for example the first signal is dedicated (e.g., used, e.g. only used) for the communication, wherein for example processing the first signal comprises at least one of: a) generating the first signal, b) transmitting the first signal, c) receiving the first signal, d) upconverting the first signal from a first frequency range to a second frequency range, e) downconverting the first signal from a third frequency range to a fourth frequency range, f) modulating the first signal, g) demodulating the first signal.

In some exemplary embodiments, the apparatus is configured to process a second signal, e.g. waveform, for the sensing, wherein for example the second signal is dedicated (e.g., used, e.g. only used) for the sensing, wherein for example the second signal is different from a or the first signal for the communication, wherein for example processing the second signal comprises at least one of: a) generating the second signal, b) transmitting the second signal, c) receiving the second signal, d) upconverting the second signal from a fifth frequency range to a sixth frequency range, e) downconverting the second signal from a seventh frequency range to an eighth frequency range, f) modulating the second signal, g) demodulating the second signal.

In some exemplary embodiments, the apparatus is configured to process a third signal, e.g. waveform, wherein for example at least a portion of the third signal is usable both for the communication and for the sensing, wherein for example processing the third signal comprises at least one of: a) generating the third signal, b) transmitting the third signal, c) receiving the third signal, d) upconverting the third signal from a ninth frequency range to a tenth frequency range, e) downconverting the third signal from an eleventh frequency range to a twelfth frequency range, f) modulating the third signal, g) demodulating the third signal.

In some exemplary embodiments, at least some of the abovementioned first to ninth frequency ranges may be at least one of: a) at least partly overlapping, b) non-overlapping, e.g. different from each other, c) adjacent to each other.

In some exemplary embodiments, at least one component of the apparatus, for example the at least one common RF processing stage, is configured to process signals associated with at least one of the communication and the sensing in a full duplex mode, wherein for example a plurality of common RF processing stages is provided, and wherein for example at least some, for example all, common RF processing stages of the plurality of common RF processing stages are configured to process the signals associated with at least one of the communication and the sensing in a full duplex mode.

In some exemplary embodiments, at least a first common RF processing stage and a second common RF processing stage is provided, wherein for example the first common RF processing stage is configured to transmit at least one transmission signal associated with at least one of the first signal and the second signal, wherein for example the second common RF processing stage is configured to receive at least one receive signal associated with, e.g. characterizing, a reflected signal portion of the transmission signal associated with the second signal.

In some exemplary embodiments, the at least one common RF processing stage comprises at least one, for example digital, interface, wherein for example the at least one digital interface is configured for a data exchange between the at least one common RF processing stage and at least one of a) the first signal processing stage, b) the second signal processing stage, c) the control unit.

Some exemplary embodiments relate to a module for processing signals, for example signals associated with at least one of communication and sensing, comprising at least some components of the apparatus according to the embodiments, wherein for example the module is a system on chip, SoC.

Some exemplary embodiments relate to a method of processing signals, for example signals associated with at least one of communication and sensing, for example for use with the apparatus according to the embodiments, the method comprising: processing, by means of a first signal processing stage, signals associated with communication, processing, by means of a second signal processing stage, signals associated with sensing, and processing, by means of at least one common radio frequency, RF, processing stage, RF signals associated with at least one of communication and sensing.

In some exemplary embodiments, the method comprises at least one of: A) processing a first signal, e.g. waveform, for the communication, wherein for example the first signal is dedicated for the communication, wherein for example processing the first signal comprises at least one of: Aa) generating the first signal, Ab) transmitting the first signal, Ac) receiving the first signal, Ad) upconverting the first signal from a first frequency range to a second frequency range, Ae) downconverting the first signal from a third frequency range to a fourth frequency range, Af) modulating the first signal, Ag) demodulating the first signal, B) processing a second signal, e.g. waveform, for the sensing, wherein for example the second signal is dedicated for the sensing, wherein for example the second signal is different from the first signal for the communication, wherein for example processing the second signal comprises at least one of: Ba) generating the second signal, Bb) transmitting the second signal, Bc) receiving the second signal, Bd) upconverting the second signal from a fifth frequency range to a sixth frequency range, Be) downconverting the second signal from a seventh frequency range to an eighth frequency range, Bf) modulating the second signal, Bg) demodulating the second signal, C) processing a third signal, e.g. waveform, wherein for example at least a portion of the third signal is usable both for the communication and for the sensing, wherein for example processing the third signal comprises at least one of: Ca) generating the third signal, Cb) transmitting the third signal, Cc) receiving the third signal, Cd) upconverting the third signal from a ninth frequency range to a tenth frequency range, Ce) downconverting the third signal from an eleventh frequency range to a twelfth frequency range, Cf) modulating the third signal, Cg) demodulating the third signal.

In some exemplary embodiments, the method comprises processing signals associated with at least one of the communication and the sensing in a full duplex mode.

In some exemplary embodiments, at least a first common RF processing stage and a second common RF processing stage is provided, wherein the method comprises: transmitting, by the first common RF processing stage, at least one transmission signal associated with at least one of the first signal and the second signal, receiving, by the second common RF processing stage, at least one receive signal associated with, e.g. characterizing, a reflected signal portion of the transmission signal associated with the second signal.

In some exemplary embodiments, the method comprises: providing a, for example central, primary unit, which comprises at least the first signal processing stage and the second signal processing stage and, optionally, a or the control unit, providing at least one, for example distributed, secondary unit (e.g., arranged remotely from, e.g. not being collocated with, the central primary unit) which comprises the at least one common radio frequency, RF, processing stage.

Further exemplary embodiments relate to a vehicle, for example a car or truck, comprising at least one apparatus according to the embodiments.

Further exemplary embodiments relate to a use of the apparatus according to the embodiments and/or of the module according to the embodiments and/or of the method according to the embodiments and/or of the vehicle according to the embodiments for at least one of: a) processing RF signals associated with at least one of communication and sensing by means of the at least one common radio frequency, RF, processing stage, b) providing joint, for example integrated, communication and sensing, c) splitting a respective protocol stack, for example a lower protocol stack, for communication and sensing, d) controlling, e.g. commonly controlling, e.g. orchestrating, communication and sensing, e) sharing an analog interface associated with the at least one common RF, processing stage between communication and sensing.

### Brief Description of Exemplary Figures

Some exemplary embodiments will now be described with reference to the accompanying drawings, in which:
- Fig. 1: schematically depicts a simplified block diagram according to exemplary embodiments,
- Fig. 2: schematically depicts a simplified block diagram according to exemplary embodiments,
- Fig. 3A: schematically depicts a simplified block diagram according to exemplary embodiments,
- Fig. 3B: schematically depicts a simplified block diagram according to exemplary embodiments,
- Fig. 4A: schematically depicts a simplified block diagram according to exemplary embodiments,
- Fig. 4B: schematically depicts a simplified block diagram according to exemplary embodiments,
- Fig. 5: schematically depicts a simplified block diagram according to exemplary embodiments,
- Fig. 6: schematically depicts a simplified block diagram according to exemplary embodiments,
- Fig. 7: schematically depicts a simplified block diagram according to exemplary embodiments,
- Fig. 8: schematically depicts a simplified block diagram according to exemplary embodiments,
- Fig. 9A: schematically depicts a simplified flow-chart according to exemplary embodiments,
- Fig. 9B: schematically depicts a simplified flow-chart according to exemplary embodiments,
- Fig. 9C: schematically depicts a simplified flow-chart according to exemplary embodiments,
- Fig. 9D: schematically depicts a simplified flow-chart according to exemplary embodiments,
- Fig. 10: schematically depicts a simplified block diagram according to exemplary embodiments,
- Fig. 11: schematically depicts a simplified block diagram according to exemplary embodiments,
- Fig. 12: schematically depicts a simplified block diagram according to exemplary embodiments,
- Fig. 13: schematically depicts a simplified block diagram according to exemplary embodiments,
- Fig. 14: schematically depicts a simplified block diagram according to exemplary embodiments,
- Fig. 15: schematically depicts a simplified block diagram according to exemplary embodiments,
- Fig. 16: schematically depicts a simplified block diagram according to exemplary embodiments,
- Fig. 17: schematically depicts a simplified block diagram according to exemplary embodiments,
- Fig. 18: schematically depicts a simplified block diagram according to exemplary embodiments,
- Fig. 19: schematically depicts a simplified diagram according to exemplary embodiments,
- Fig. 20: schematically depicts a simplified diagram according to exemplary embodiments,
- Fig. 21: schematically depicts a simplified diagram according to exemplary embodiments,
- Fig. 22: schematically depicts a simplified block diagram according to exemplary embodiments,
- Fig. 23: schematically depicts aspects of use according to exemplary embodiments,
- Fig. 24: schematically depicts a simplified block diagram according to exemplary embodiments,
- Fig. 25: schematically depicts a simplified block diagram according to exemplary embodiments,
- Fig. 26: schematically depicts a simplified block diagram according to exemplary embodiments,
- Fig. 27A: schematically depicts a simplified block diagram according to exemplary embodiments,
- Fig. 27B: schematically depicts a simplified block diagram according to exemplary embodiments,
- Fig. 28: schematically depicts a simplified block diagram according to exemplary embodiments.

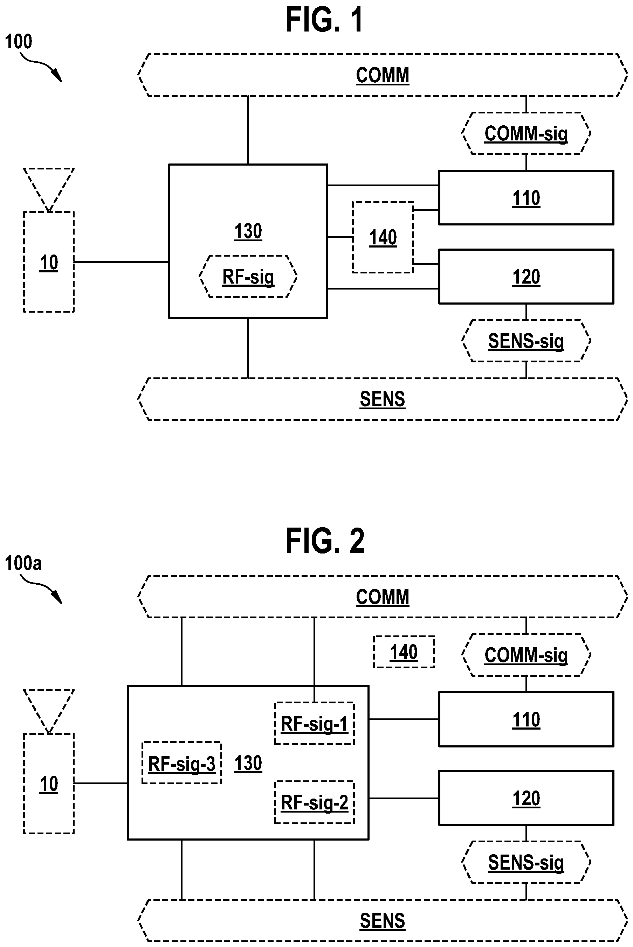

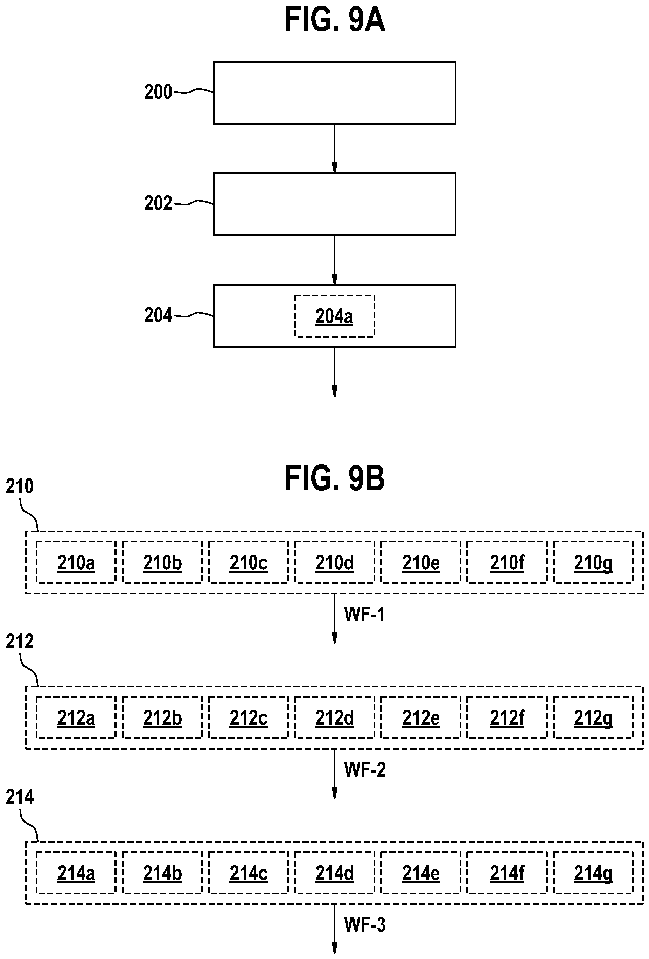

Exemplary embodiments, see for example Fig. 1 and 9A, relate to an apparatus 100 for processing signals, for example signals associated with at least one of communication COMM and sensing SENS, the apparatus 100 comprising: a first signal processing stage 110 configured to process (see also block 200 of Fig. 9A) signals COMM-sig associated with communication COMM, a second signal processing stage 120 configured to process 202 signals SENS-sig associated with sensing SENS, and at least one common radio frequency, RF, processing stage 130 for processing 204 RF signals RF-sig associated with at least one of communication COMM and sensing SENS.

In some exemplary embodiments, Fig. 1, an antenna system 10 comprising at least one antenna or antenna array may be provided, and may e.g. be connected to the at least one common RF processing stage 130. In some exemplary embodiments, the antenna system 10 may be used for transmitting and/or receiving the radio frequency signals RF-sig associated with the communication COMM and/or with the sensing SENS.

In some exemplary embodiments 100a of the apparatus, Fig. 2, the at least one common RF processing stage 130 is configured to process a) both first RF signals RF-sig-1, which are associated with, e.g. usable for, communication COMM, and second RF signals RF-sig-2, which are associated with, e.g. usable for, sensing SENS, see, for example also the block 204a of Fig. 9A, and/or b) third RF signals RF-sig-3, which are associated with, e.g. usable for, both communication COMM and sensing SENS.

In some exemplary embodiments, the at least one common RF processing stage 130 is configured to process the first RF signals RF-sig-1 and the second RF signals RF-sig-2 in at least one of: A) an at least partly temporally overlapping fashion, for example simultaneously, B) in a time-multiplexed fashion, C) in a frequency-multiplexed fashion.

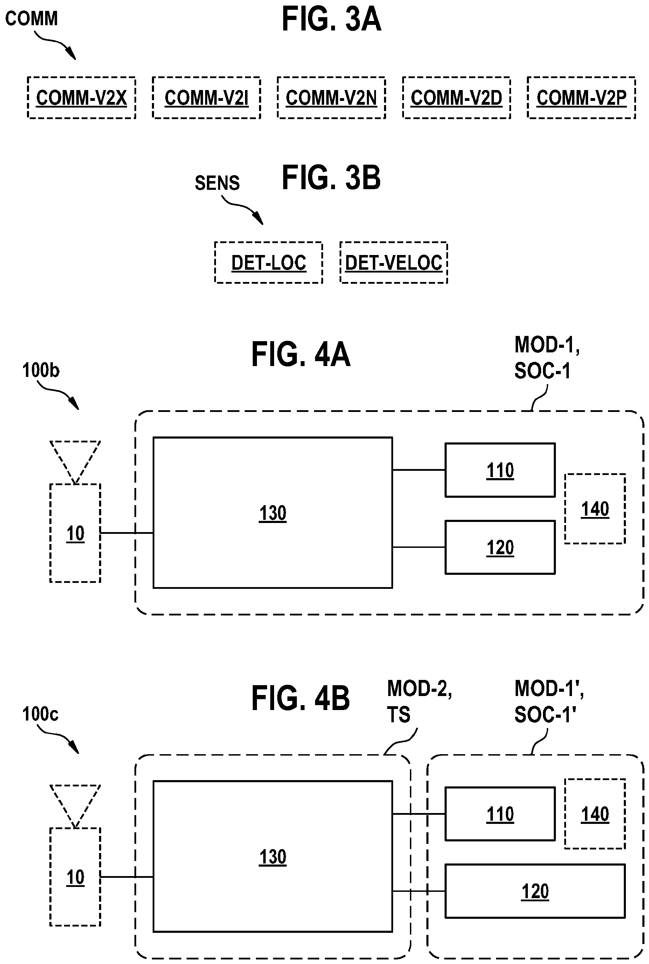

In some exemplary embodiments, Fig. 3A, the communication COMM comprises at least one of: a) vehicle-to-everything, V2X, communication COMM-V2X, for example based on and/or compatible with at least one 3GPP standard of the fifth generation, 5G, or sixth generation, 6G, for example at least one of a1) vehicle-to-infrastructure, V2I, communication COMM-V2I, a2) vehicle-to-network, V2N, communication COMM-V2N, a3) vehicle-to-device, V2D, communication COMM-V2D, a4) vehicle-to-pedestrian, V2P, communication COMM-V2P.

In some exemplary embodiments, Fig. 3B, the sensing SENS comprises at least one of: a) determining DET-LOC, e.g. estimating, a location of an object, b) determining DET-VELOC, e.g. estimating, a velocity of an object.

In some exemplary embodiments, the sensing can e.g. be performed by using RADAR signals or a RADAR technique, respectively.

In some exemplary embodiments 100b, Fig. 4A, at least two elements of the a) first signal processing stage 110, b) the second signal processing stage 120 and the c) at least one common RF processing stage 130 are arranged in a same first module MOD-1, for example within a same first system on chip (SoC) SOC-1. In the present example of Fig. 4A, the processing stages 110, 120, 130 are comprised within the first module MOD-1, as well as an optional control unit 140 which is explained in detail further below.

In some exemplary embodiments 100c, Fig. 4B, the first signal processing stage 110 and the second signal processing stage 120 are arranged in the same first module MOD-1', for example within the same first system on chip SOC-1', wherein, for example, the at least one common RF processing stage 130 is arranged in a second module MOD-2, for example target system TS (e.g., a vehicle) or part of a target system, wherein, for example, the second module MOD-2, is different from the first module MOD-1'. In some exemplary embodiments, the optional control unit 140 may e.g. be provided in the first module MOD-1'.

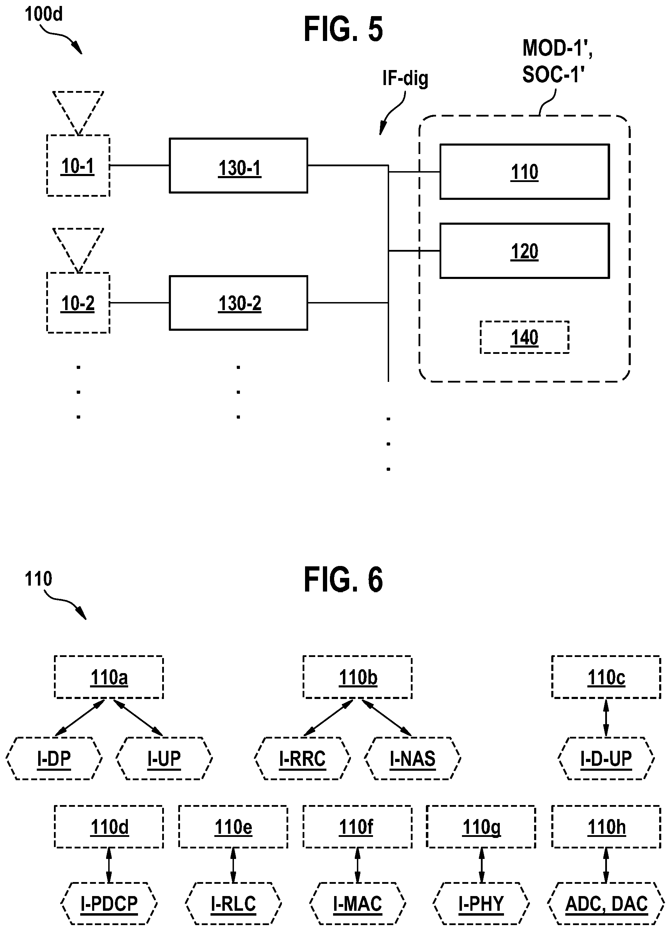

In some exemplary embodiments of the apparatus 100d, Fig. 5, more than one common RF processing stage 130 (Fig. 1) for processing RF signals associated with communication and sensing is provided, e.g. two or more common RF processing stages, see, for example, the two exemplary common RF processing stages 130-1, 130-2 of the configuration 100d of Fig. 5. In some exemplary embodiments, e.g. more than six (not shown in Fig. 5) common RF processing stages may be used.

In some exemplary embodiments, Fig. 5, the apparatus 100d and/or the at least one common RF processing stage 130-1, 130-2, ... comprises at least one, for example digital, interface, IF-dig and/or the at least one common RF processing stage 130-1, 130-2, ... is configured to use a, for example digital, interface, IF-dig, wherein, for example, the at least one digital interface IF-dig is configured for a data exchange between the at least one common RF processing stage 130-1, 130-2, ... and at least one of a) the first signal processing stage 110, b) the second signal processing stage 120, c) the optional control unit 140.

In some exemplary embodiments, Fig. 5, a respective common RF processing stage 130-1, 130-2 may be connectable and/or connected to a respective antenna system 10-1, 10-2. In some exemplary embodiments, the antenna systems 10-1, 10-2 may constitute and/or form part of a distributed antenna system.

In some exemplary embodiments, Fig. 1, the apparatus 100 comprises a control unit 140, for example an orchestration unit, configured to at least temporarily control at least one component of at least one of: a) the first signal processing stage 110, b) the second signal processing stage 120, c) the at least one common RF processing stage 130.

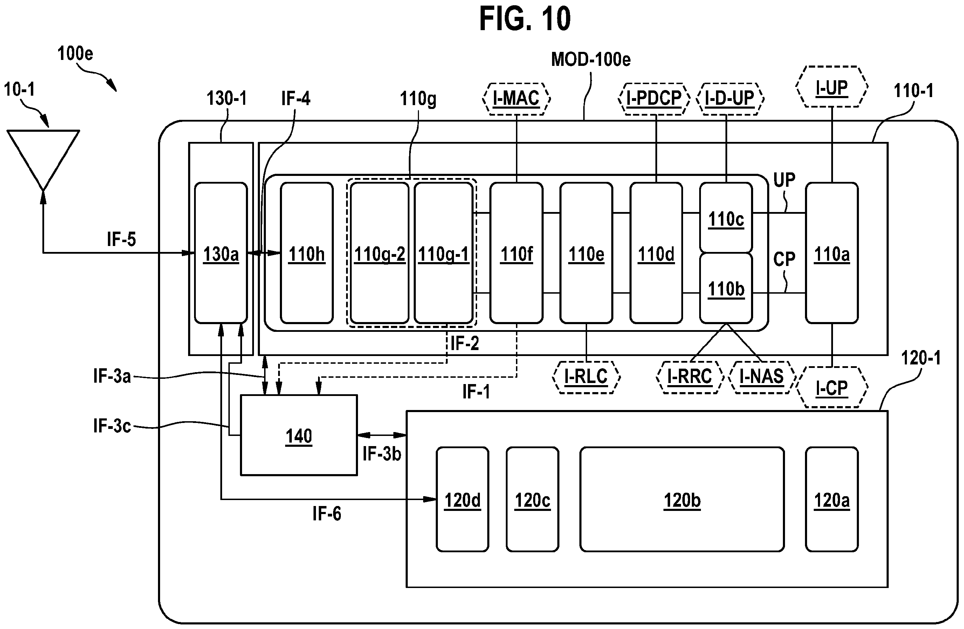

In some exemplary embodiments, Fig. 6, the first signal processing stage 110 comprises at least one of: a) a, for example vehicle-to-everything, V2X, communication layer unit 110a configured to process information associated with at least one of a1) a control plane, for example a V2X communication control plane, a2) a user plane, for example a V2X communication user plane (e.g., data plane information I-DP and/or user plane information I-UP), b) a processing unit 110b configured to process at least one of: b1) information I-RRC associated with a radio resource control, RRC, b2) information I-NAS associated with a non-access stratum, NAS, c) a processing unit 110c configured to process information I-D-UP associated with data that is associated with a or the user plane, d) a processing unit 110d configured to process information I-PDCP associated with a packet data convergence protocol (e.g., related to a control plane and/or a user plane), e) a processing unit 110e configured to process information I-RLC associated with a radio link control, RLC, f) a processing unit 110f configured to process information I-MAC associated with a medium access control, MAC, g) a processing unit 110g configured to process information I-PHY associated with a physical layer, PHY, wherein, for example, the processing unit 110g configured to process information associated with the physical layer comprises at least one of: g1) a primary physical layer processing stage 110g-1 (see, for example, Fig. 10) configured to perform higher physical layer functions, g2) a secondary physical layer processing stage 110g-2 configured to perform lower physical layer functions, e.g., with respect to the higher physical layer functions of the primary physical layer processing stage, e.g. Fast Fourier Transforms, h) a processing unit 110h configured to perform at least one of h1) analog-to-digital conversion, ADC, h2) digital-to-analog conversion, DAC.

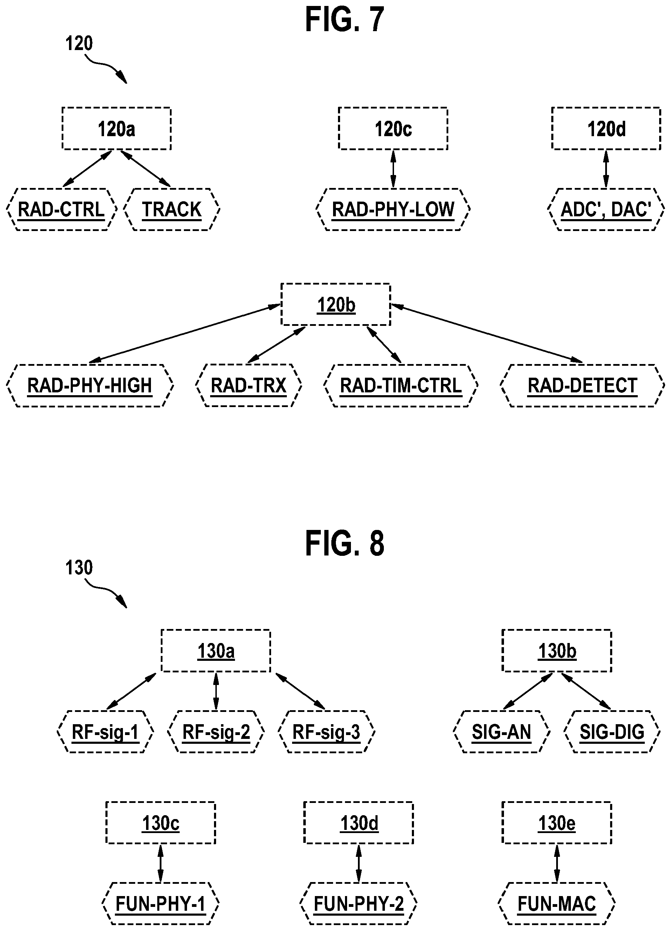

In some exemplary embodiments, Fig. 7, the second signal processing stage 120 comprises at least one of: a) a processing unit 120a configured to perform at least one of a1) RADAR control RAD-CTRL and a2) target tracking TRACK, b) a processing unit 120b configured to perform at least one of b1) higher physical layer RADAR functions RAD-PHY-HIGH, b2) RADAR transceiver functions RAD-TRX, b3) RADAR timing control RAD-TIM-CTRL, b4) RADAR detection RAD-DETECT, c) a processing unit 120c configured to perform lower physical layer RADAR functions RAD-PHY-LOW, e.g., with respect to the higher physical layer RADAR functions RAD-PHY-HIGH, d) a processing unit 120d configured to perform at least one of d1) analog-to-digital conversion, ADC', d2) digital-to-analog conversion, DAC'.

In some exemplary embodiments, Fig. 8, the at least one common RF processing stage 130 comprises at least one of: a) a common RF processing unit 130a configured to process a1) both first, e.g. the first, RF signals RF-sig-1, which are associated with the communication, and second, e.g. the second, RF signals RF-sig-2, which are associated with the sensing, and/or a2) third, e.g. the third, RF signals RF-sig-3, which are associated both with the communication and the sensing, b) a processing unit 130b configured to perform at least one of b1) analog-to-digital conversion, ADC, of at least one analog signal SIG-AN associated with at least one of the communication and the sensing, b2) digital-to-analog conversion, DAC, of at least one digital signal SIG-DIG associated with at least one of the communication and the sensing, c) a processing unit 130c configured to perform first physical layer functions FUN-PHY-1, e.g. lower physical layer functions such as e.g. Fast Fourier Transformation, for signals associated with at least one of the communication and the sensing, d) a processing unit 130d configured to perform physical layer functions FUN-PHY-2, e.g. higher physical layer functions, e.g. as compared to the lower physical layer functions FUN-PHY-1, for signals associated with at least one of the communication and the sensing, e) a processing unit 130e configured to perform medium access layer functions FUN-MAC, e.g. lower medium access layer functions, for signals associated with at least one of the communication and the sensing.

In some exemplary embodiments, Fig. 9B, the apparatus is configured to process 210 a first signal, e.g. waveform, WF-1 for the communication COMM (Fig. 1), wherein for example the first signal WF-1 is dedicated for the communication COMM, wherein for example processing 210 the first signal WF-1 comprises at least one of: a) generating 210a the first signal WF-1, b) transmitting 210b the first signal WF-1, c) receiving 210c the first signal WF-1, d) upconverting 210d the first signal WF-1 from a first frequency range to a second frequency range, e) downconverting 210e the first signal WF-1 from a third frequency range to a fourth frequency range, f) modulating 210f the first signal WF-1, g) demodulating 210g the first signal WF-1.

In some exemplary embodiments, Fig. 9B, the apparatus is configured to process 212 a second signal, e.g. waveform, WF-2 for the sensing SENS, wherein for example the second signal WF-2 is dedicated for the sensing, wherein for example the second signal WF-2 is different from a or the first signal WF-1 for the communication, wherein for example processing 212 the second signal WF-2 comprises at least one of: a) generating 212a the second signal WF-2, b) transmitting 212b the second signal WF-2, c) receiving 212c the second signal WF-2, d) upconverting 212d the second signal WF-2 from a fifth frequency range to a sixth frequency range, e) downconverting 212e the second signal WF-2 from a seventh frequency range to an eighth frequency range, f) modulating 212f the second signal WF-2, g) demodulating 212g the second signal WF-2.

In some exemplary embodiments, Fig. 9B, the apparatus is configured to process 214 a third signal, e.g. waveform WF-3, wherein for example at least a portion of the third signal WF-3 is usable both for the communication and for the sensing, wherein for example processing 214 the third signal WF-3 comprises at least one of: a) generating 214a the third signal WF-3, b) transmitting 214b the third signal WF-3, c) receiving 214c the third signal WF-3, d) upconverting 214d the third signal WF-3 from a ninth frequency range to a tenth frequency range, e) downconverting 214e the third signal WF-3 from an eleventh frequency range to a twelfth frequency range, f) modulating 214f the third signal WF-3, g) demodulating 214f the third signal WF-3.

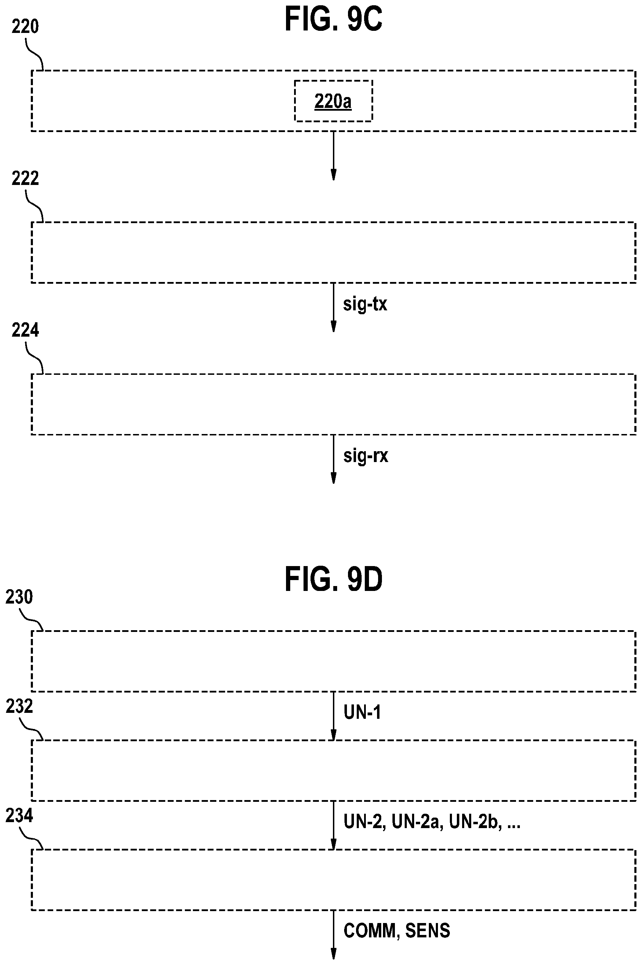

In some exemplary embodiments, Fig. 9C, at least one component of the apparatus, for example the at least one common RF processing stage 130, is configured to process 220 signals (e.g., RF signals) associated with at least one of the communication COMM and the sensing SENS in a full duplex mode, wherein for example a plurality of common RF processing stages is provided (see, for example, elements 130-1, 130-2, ... of Fig. 5), and wherein for example at least some, for example all, common RF processing stages of the plurality of common RF processing stages are configured to process 220a the signals associated with at least one of the communication and the sensing in a full duplex mode.

In some exemplary embodiments, Fig. 5, 9C, at least a first common RF processing stage 130-1 and a second common RF processing stage 130-2 is provided, wherein for example the first common RF processing stage 130-1 is configured to transmit 222 (Fig. 9C) at least one transmission signal sig-tx associated with at least one of the first signal WF-1 and the second signal WF-2, wherein for example the second common RF processing stage 130-2 is configured to receive 224 at least one receive signal sig-rx associated with, e.g. characterizing, a reflected signal portion of the transmission signal associated with the second signal WF-2.

In some exemplary embodiments, as mentioned above, the at least one common RF processing stage 130, 130-1, 130-2, ... comprises at least one, for example digital, interface IF-dig (Fig. 5), wherein for example the at least one digital interface IF-dig is configured for a data exchange between the at least one common RF processing stage 130, 130-1, 130-2, ... and at least one of a) the first signal processing stage 110, b) the second signal processing stage 120, c) the control unit 140.

Some exemplary embodiments, Fig. 4A, relate to a module MOD-1 for processing signals, for example signals associated with at least one of communication COMM and sensing SENS, comprising at least some components of the apparatus according to the embodiments, wherein for example the module MOD-1 is a system on chip, SoC, SOC-1.

In some exemplary embodiments, the module MOD-1 may e.g. comprise the components 110, 120, 130, 140, as e.g. depicted by Fig. 4A.

In some exemplary embodiments, the module MOD-1' may e.g. comprise the components 110, 120, 140, as e.g. depicted by Fig. 4B.

In some exemplary embodiments, other exemplary configurations (not shown) for the module MOD-1, MOD-1' are also conceivable.

Some exemplary embodiments, Fig. 9A, relate to a method of processing signals, for example signals associated with at least one of communication and sensing, for example for use with the apparatus according to the embodiments, the method comprising: processing 200, by means of a first signal processing stage 110, signals associated with communication, processing 202, by means of a second signal processing stage 120, signals associated with sensing, and processing 204, by means of at least one common radio frequency, RF, processing stage, RF signals associated with at least one of communication and sensing.

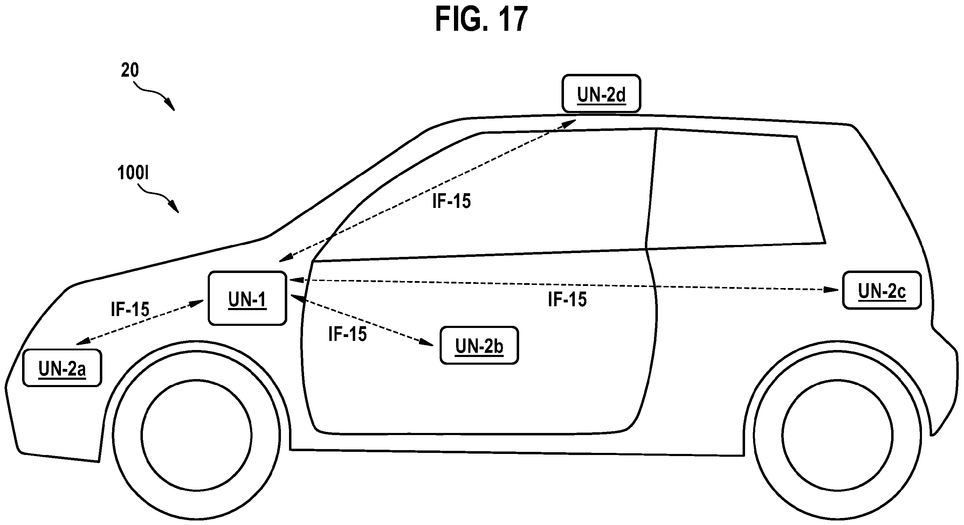

In some exemplary embodiments, Fig. 9D, 17, the method comprises: providing 230 a, for example central, primary unit UN-1, which comprises at least the first signal processing stage 110 (Fig. 1) and the second signal processing stage 120 and, optionally, a or the control unit 140, providing 232 (Fig. 9D) at least one, for example distributed, secondary unit UN-2a, UN-2b, UN-2c, UN-2d, which, e.g. each of which, comprises the at least one common radio frequency, RF, processing stage 130. In some exemplary embodiments, the units UN-1, UN-2a, UN-2b, ... may e.g. be used, see the optional block 234 of Fig. 9D, for communication COMM and/or sensing SENS.

Fig. 10 schematically depicts an exemplary configuration 100e of an apparatus according to some exemplary embodiments. A first signal processing stage 110-1 is provided, which is configured to process 200 signals COMM-sig associated with communication COMM, e.g. identical or at least similar to the first signal processing stage 110 explained above with respect e.g. to Fig. 1.

In some exemplary embodiments, Fig. 10, a second signal processing stage 120-1 is provided, which is configured to process 202 signals SENS-sig associated with sensing SENS, e.g. identical or at least similar to the second signal processing stage 120 explained above with respect e.g. to Fig. 1.

In some exemplary embodiments, the apparatus 100e of Fig. 10 comprises a common RF processing stage 130-1 for processing 204 RF signals RF-sig associated with at least one of communication COMM and sensing SENS, e.g. identical or at least similar to the common RF processing stage 130 explained above with respect e.g. to Fig. 1.

In some exemplary embodiments, Fig. 10, the apparatus 100e, e.g. its first signal processing stage 110-1, comprises a communication layer unit 110a, e.g. a V2X communication layer unit 110a. In some exemplary embodiments, the V2X communication layer unit 110a is configured to process information I-CP associated with a control plane CP, for example a V2X communication control plane. In some exemplary embodiments, the V2X communication layer unit 110a is configured to process information I-UP associated with a user plane UP, for example a V2X communication user plane.

In some exemplary embodiments, the V2X communication layer unit 110a is configured to process both information I-CP associated with the control plane CP, for example V2X communication control plane and information I-UP associated with the user plane UP, for example V2X communication user plane.

In some exemplary embodiments, Fig. 10, the apparatus 100e, e.g. its first signal processing stage 110-1, comprises a processing unit 110b configured to process at least one of: information I-RRC associated with a radio resource control, RRC, information I-NAS associated with a non-access stratum, NAS.

In some exemplary embodiments, Fig. 10, the apparatus 100e, e.g. its first signal processing stage 110-1, comprises a processing unit 110c configured to process information I-D-UP associated with data that is associated with the user plane UP.

In some exemplary embodiments, Fig. 10, the apparatus 100e, e.g. its first signal processing stage 110-1, comprises a processing unit 110d configured to process information I-PDCP associated with a packet data convergence protocol.

In some exemplary embodiments, Fig. 10, the apparatus 100e, e.g. its first signal processing stage 110-1, comprises a processing unit 110e configured to process information I-RLC associated with a radio link control.

In some exemplary embodiments, Fig. 10, the apparatus 100e, e.g. its first signal processing stage 110-1, comprises a processing unit 110f configured to process information I-MAC associated with a medium access control, MAC.

In some exemplary embodiments, Fig. 10, the apparatus 100e, e.g. its first signal processing stage 110-1, comprises a processing unit 110g configured to process information I-PHY associated with a physical layer, PHY.

In some exemplary embodiments, Fig. 10, the processing unit 110g comprises at least one of: g1) a primary physical layer processing stage 110g-1 configured to perform higher physical layer functions, g2) a secondary physical layer processing stage 110g-2 configured to perform lower physical layer functions, e.g., with respect to the higher physical layer functions of the primary physical layer processing stage 110g-1.

In some exemplary embodiments, the lower physical layer functions may e.g. comprise Fast Fourier Transforms.

In some exemplary embodiments, Fig. 10, the apparatus 100e, e.g. its first signal processing stage 110-1, comprises a processing unit 110h configured to perform at least one of h1) analog-to-digital conversion, ADC, e.g. of signals as provided by the common RF processing stage 130-1, h2) digital-to-analog conversion, DAC, e.g., of digital signals as may be provided by the processing unit 110g, e.g. its secondary physical layer processing stage 110g-2.

In some exemplary embodiments, Fig. 10, the apparatus 100e, e.g. its second signal processing stage 120-1, comprises a processing unit 120a configured to perform at least one of a1) RADAR control RAD-CTRL (Fig. 7) and a2) target tracking TRACK.

In some exemplary embodiments, Fig. 10, the apparatus 100e, e.g. its second signal processing stage 120-1, comprises a processing unit 120b configured to perform at least one of b1) higher physical layer RADAR functions RAD-PHY-HIGH (Fig. 7), b2) RADAR transceiver functions RAD-TRX, b3) RADAR timing control RAD-TIM-CTRL, b4) RADAR detection RAD-DETECT.

In some exemplary embodiments, Fig. 10, the apparatus 100e, e.g. its second signal processing stage 120-1, comprises a processing unit 120c configured to perform lower physical layer RADAR functions RAD-PHY-LOW, e.g., with respect to the higher physical layer RADAR functions RAD-PHY-HIGH.

In some exemplary embodiments, Fig. 10, the apparatus 100e, e.g. its second signal processing stage 120-1, comprises a processing unit 120d configured to perform at least one of d1) analog-to-digital conversion ADC', e.g. of signals as provided by the common RF processing stage 130-1, d2) digital-to-analog conversion DAC', e.g., of digital signals as may be provided by the processing unit 120c.

In some exemplary embodiments, Fig. 10, the apparatus 100e, e.g. its common RF processing stage 130-1 comprises a common RF processing unit 130a configured to process a1) both the first, RF signals RF-sig-1 (Fig. 2), which are associated with the communication COMM, and the second RF signals RF-sig-2, which are associated with the sensing SENS, and/or a2) the third RF signals RF-sig-3, which are associated both with the communication COMM and the sensing SENS.

In some exemplary embodiments, Fig. 10, the apparatus 100e may comprise the optional control unit 140 configured to at least temporarily control at least one component of at least one of: a) the first signal processing stage 110-1, b) the second signal processing stage 120-1, c) the at least one common RF processing stage 130-1.

In some exemplary embodiments, the control unit 140 is configured to coordinate, e.g. orchestrate, an operation of the first signal processing stage 110-1 and/or the second signal processing stage 120-1 and/or the at least one common RF processing stage 130-1.

As an example, in some exemplary embodiments, a first, for example logical, interface IF-1 may be provided to enable an information and/or data exchange between the processing unit 110f configured to process information I-MAC associated with the medium access control and the control unit 140.

In some exemplary embodiments, the information exchange related to the first interface IF-1 may be unidirectional, as exemplarily depicted by Fig. 10, e.g. from the processing unit 110f to the control unit 140. However, in some exemplary embodiments, the information exchange between the processing unit 110f and the control unit 140 may be bidirectional (not shown).

In some exemplary embodiments, a second, for example logical, interface IF-2 may be provided to enable an information and/or data exchange between the processing unit 110g, e.g. its primary physical layer processing stage 110g-1, and the control unit 140.

In some exemplary embodiments, the information exchange related to the second interface IF-2 may be unidirectional, as exemplarily depicted by Fig. 10, e.g. from the processing unit 110g, e.g. its primary physical layer processing stage 110g-1, to the control unit 140. However, in some exemplary embodiments, the information exchange between the processing unit 110g, e.g. its primary physical layer processing stage 110g-1, and the control unit 140 may be bidirectional (not shown).

In some exemplary embodiments, one or more, for example physical, interfaces, IF3-a, IF3-b, IF3-b between the control unit 140 and a respective one of the first signal processing stage 110-1, the second signal processing stage 120-1 and the common RF processing stage 130-1 may be provided. As can be seen from Fig. 10, in some exemplary embodiments, physical interface IF3-a provides at least an exchange (e.g., unidirectional or bidirectional) of information, e.g. data, between the control unit 140 and the first signal processing stage 110-1. Physical interface IF3-b provides at least an exchange (e.g., unidirectional or bidirectional) of information, e.g. data, between the control unit 140 and the second signal processing stage 110-2. Physical interface IF3-c provides at least an exchange (e.g., unidirectional or bidirectional) of information, e.g. data, between the control unit 140 and the common RF processing stage 130-1.

In some exemplary embodiments, a, for example physical, interface IF-4 may be provided, which provides at least an exchange of information, e.g. data and/or signals, e.g. RF signals, between the first signal processing stage 110-1 and the common RF processing stage 130-1. In some exemplary embodiments, the interface IF-4 can e.g. be used to provide signals associated with the communication COMM to the common RF processing stage 130-1, e.g. for at least one of (e.g., further) signal processing and transmitting, e.g. via an antenna system 10-1.

In some exemplary embodiments, a, for example physical, interface IF-5 may be provided, which couples the antenna system 10-1 with the common RF processing stage 130-1.

In some exemplary embodiments, the antenna system 10-1 and/or the interface IF-5 may comprise at least one further component (not shown), e.g. for processing RF signals, e.g. at least one of: a) amplifier, b) power amplifier, c) low noise amplifier (e.g., for amplifying received signals), d) filter, e.g. bandpass filter, e) attenuator, e.g. variable attenuator, f) circulator, g) diplexer.

In some exemplary embodiments, a, for example physical, interface IF-6 may be provided, which provides at least an exchange of information, e.g. data and/or signals, e.g. RF signals, between the second signal processing stage 110-2 and the common RF processing stage 130-1. In some exemplary embodiments, the interface IF-6 can e.g. be used to provide signals associated with the sensing SENS to the common RF processing stage 130-1, e.g. for at least one of (e.g., further) signal processing and transmitting, e.g. via an antenna system 10-1.

In some exemplary embodiments, Fig. 10, the apparatus 100e may be provided in form of a, for example single, module MOD-100e. In some exemplary embodiments, Fig. 10, the apparatus 100e, e.g. module MOD-100e, can e.g. be provided as a, for example versatile, communication device, e.g. V2X sensor, e.g. for vehicles, offering a combined functionality with respect to communication COMM and sensing SENS.

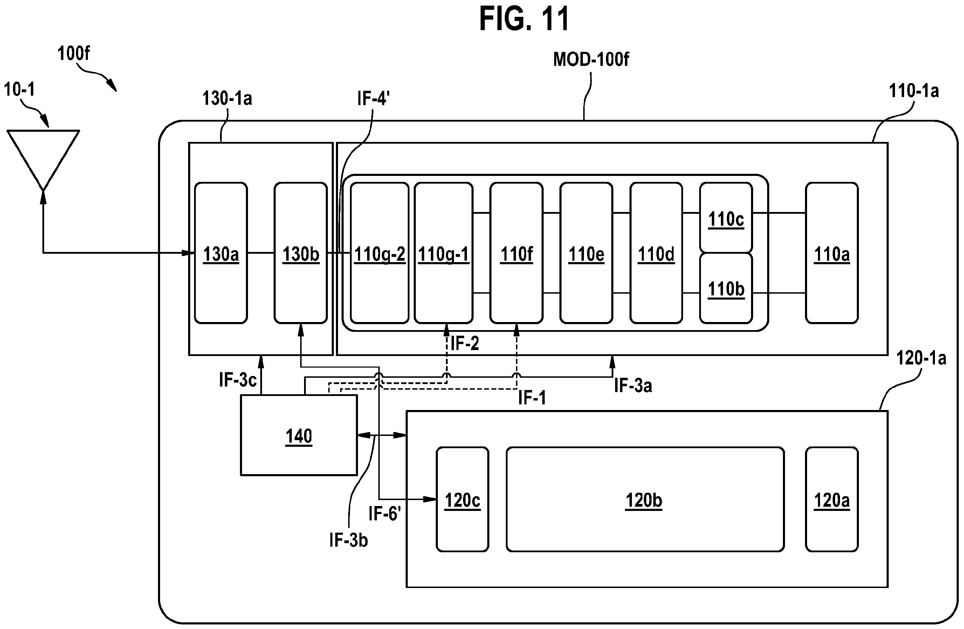

Fig. 11 schematically depicts an exemplary configuration 100f of an apparatus according to some exemplary embodiments. Similar to element 110-1 of Fig. 10, the apparatus 100f of Fig. 11 comprises a first signal processing stage 110-1a, which is configured to process 200 signals COMM-sig associated with communication COMM, e.g. identical or at least similar to the first signal processing stage 110 explained above with respect e.g. to Fig. 1.

In some exemplary embodiments, Fig. 11, a second signal processing stage 120-1a is provided, which is configured to process 202 signals SENS-sig associated with sensing SENS, e.g. identical or at least similar to the second signal processing stage 120 explained above with respect e.g. to Fig. 1.

In some exemplary embodiments, the apparatus 100f of Fig. 11 comprises a common RF processing stage 130-1a for processing 204 RF signals RF-sig associated with at least one of communication COMM and sensing SENS, e.g. identical or at least similar to the common RF processing stage 130 explained above with respect e.g. to Fig. 1.

In some exemplary embodiments, Fig. 11, the apparatus 100f, e.g. its first signal processing stage 110-1a, comprises the components 110a, 110b, 110c, 110d, 110e, 110f, 110g-1, 110g-2, e.g. similar to the apparatus 100e of Fig. 10, but, for example, not the component 110h of Fig. 10.

In some exemplary embodiments, Fig. 11, the apparatus 100f, e.g. its second signal processing stage 120-1a, comprises the components 120a, 120b, 120c, e.g. similar to the apparatus 100e of Fig. 10, but, for example, not the component 120d of Fig. 10.

In some exemplary embodiments, Fig. 11, the apparatus 100f, e.g. its common RF processing stage 130-1a, comprises the component 130a, e.g. similar to the apparatus 100e of Fig. 10, and, additionally, a further component 130b.

In some exemplary embodiments, Fig. 11, component 130b is or comprises a processing unit 130b configured to perform at least one of b1) analog-to-digital conversion, ADC, of at least one analog signal SIG-AN (Fig. 8) associated with at least one of the communication COMM and the sensing SENS, b2) digital-to-analog conversion, DAC, of at least one digital signal SIG-DIG associated with at least one of the communication COMM and the sensing SENS.

In some exemplary embodiments, Fig. 11, a, for example physical, interface IF-4' may be provided, which provides at least an exchange of information, e.g. data and/or signals, between the first signal processing stage 110-1a and the common RF processing stage 130-1a, e.g. between the respective components 110g-2, 130b thereof.

In some exemplary embodiments, Fig. 11, a, for example physical, interface IF-6' may be provided, which provides at least an exchange of information, e.g. data and/or signals, between the second signal processing stage 120-1a and the common RF processing stage 130-1a, e.g. between the respective components 120c, 130b thereof.

In some exemplary embodiments, Fig. 11, the apparatus 100f may be provided in form of a, for example single, module MOD-100f. In some exemplary embodiments, Fig. 11, the apparatus 100f, e.g. module MOD-100f, can e.g. be provided as a, for example versatile, communication device, e.g. V2X sensor, e.g. for vehicles, offering a combined functionality with respect to communication COMM and sensing SENS.

When comparing the exemplary configuration 100e of Fig. 10 with the exemplary configuration 100f of Fig. 11, it can be noted that the common RF processing stage 130-1a of Fig. 11 is capable of ADC and/or DAC processing of signals, e.g. by means of the processing unit 130b, whereas in the configuration 100e of Fig. 10, an ADC and/or DAC processing of signals may e.g. be performed by respective components 110h, 120d of the first signal processing stage 110-1 and of the second signal processing stage 120-1, respectively.

When further comparing the exemplary configuration 100e of Fig. 10 with the exemplary configuration 100f of Fig. 11, it can be noted that in some exemplary embodiments at least one of the interfaces IF-4, IF-6 of Fig. 10 can e.g. be an analog interface, whereas, for example, at least one of the interfaces IF-4', IF-6' of Fig. 11 can e.g. be a digital interface.

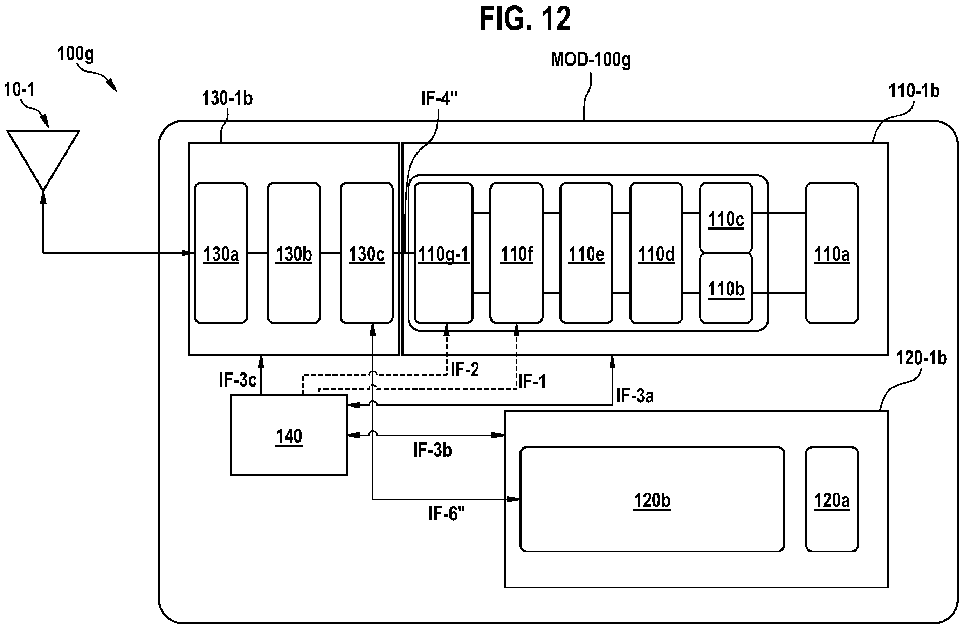

Fig. 12 schematically depicts an exemplary configuration 100g of an apparatus according to some exemplary embodiments. Similar to element 110-1 of Fig. 10, the apparatus 100g of Fig. 12 comprises a first signal processing stage 110-1b, which is configured to process 200 signals COMM-sig associated with communication COMM, e.g. identical or at least similar to the first signal processing stage 110 explained above with respect e.g. to Fig. 1.

In some exemplary embodiments, Fig. 12, a second signal processing stage 120-1b is provided, which is configured to process 202 signals SENS-sig associated with sensing SENS, e.g. identical or at least similar to the second signal processing stage 120 explained above with respect e.g. to Fig. 1.

In some exemplary embodiments, the apparatus 100g of Fig. 12 comprises a common RF processing stage 130-1b for processing 204 RF signals RF-sig associated with at least one of communication COMM and sensing SENS, e.g. identical or at least similar to the common RF processing stage 130 explained above with respect e.g. to Fig. 1.

In some exemplary embodiments, Fig. 12, the apparatus 100g, e.g. its first signal processing stage 110-1b, comprises the components 110a, 110b, 110c, 110d, 110e, 110f, 110g-1, e.g. similar to the apparatus 100f of Fig. 11, but, for example, not the component 110g-2 of Fig. 11.

In some exemplary embodiments, Fig. 12, the apparatus 100g, e.g. its second signal processing stage 120-1b, comprises the components 120a, 120b, e.g. similar to the apparatus 100f of Fig. 11, but, for example, not the component 120c of Fig. 11.

In some exemplary embodiments, Fig. 12, the apparatus 100g, e.g. its common RF processing stage 130-1b, comprises the components 130a, 130b, e.g. similar to the apparatus 100f of Fig. 11, and, additionally, a further component 130c.

In some exemplary embodiments, Fig. 12, component 130c is or comprises a processing unit configured to perform first physical layer functions FUN-PHY-1, e.g. lower physical layer functions such as e.g. Fast Fourier Transformation and/or modulation, for example OFDM (orthogonal frequency-division multiplexing) modulation, for signals associated with at least one of the communication COMM and the sensing SENS.

In some exemplary embodiments, Fig. 12, a, for example physical, interface IF-4" may be provided, which provides at least an exchange of information, e.g. data and/or signals, between the first signal processing stage 110-1b and the common RF processing stage 130-1b, e.g. between the respective components 110g-1, 130c thereof.

In some exemplary embodiments, Fig. 12, a, for example physical, interface IF-6" may be provided, which provides at least an exchange of information, e.g. data and/or signals, between the second signal processing stage 120-1b and the common RF processing stage 130-1b, e.g. between the respective components 120b, 130c thereof.

In some exemplary embodiments, Fig. 12, the apparatus 100g may be provided in form of a, for example single, module MOD-100g. In some exemplary embodiments, Fig. 12, the apparatus 100g, e.g. module MOD-100g, can e.g. be provided as a, for example versatile, communication device, e.g. V2X sensor, e.g. for vehicles, offering a combined functionality with respect to communication COMM and sensing SENS.

When comparing the exemplary configuration 100f of Fig. 11 with the exemplary configuration 100g of Fig. 12, it can be noted that the common RF processing stage 130-1b of Fig. 12 is, e.g. additionally, with respect to Fig. 11, capable of performing first physical layer functions FUN-PHY-1, e.g. lower physical layer functions such as e.g. Fast Fourier Transformation and/or modulation, for example OFDM modulation, for signals associated with at least one of the communication COMM and the sensing SENS, e.g. by means of the processing unit 130c. In other words, in some exemplary embodiments, the apparatus 100g, e.g. by means of its common RF processing stage 130-1b, provides common first physical layer functions FUN-PHY-1, e.g. common lower physical layer functions, processing, e.g. for signals associated with at least one of the communication COMM and the sensing SENS.

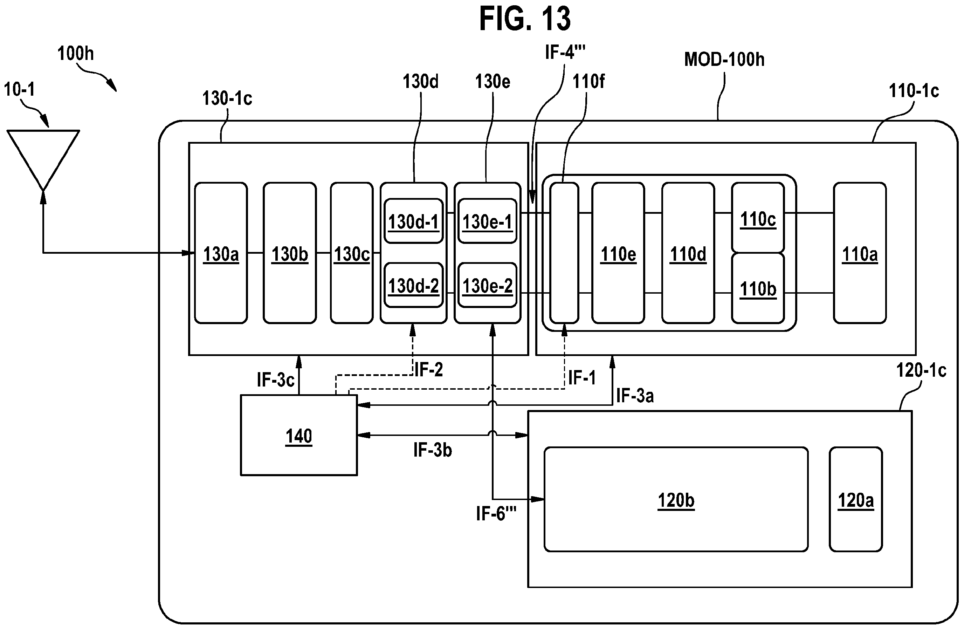

Fig. 13 schematically depicts an exemplary configuration 100h of an apparatus according to some exemplary embodiments. Similar to element 110-1 of Fig. 10, the apparatus 100h of Fig. 13 comprises a first signal processing stage 110-1c, which is configured to process 200 signals COMM-sig associated with communication COMM, e.g. identical or at least similar to the first signal processing stage 110 explained above with respect e.g. to Fig. 1.

In some exemplary embodiments, Fig. 13, a second signal processing stage 120-1c is provided, which is configured to process 202 signals SENS-sig associated with sensing SENS, e.g. identical or at least similar to the second signal processing stage 120 explained above with respect e.g. to Fig. 1.

In some exemplary embodiments, the apparatus 100h of Fig. 13 comprises a common RF processing stage 130-1c for processing 204 RF signals RF-sig associated with at least one of communication COMM and sensing SENS, e.g. identical or at least similar to the common RF processing stage 130 explained above with respect e.g. to Fig. 1.

In some exemplary embodiments, Fig. 13, the apparatus 100h, e.g. its first signal processing stage 110-1c, comprises the components 110a, 110b, 110c, 110d, 110e, 110f, e.g. similar to the apparatus 100g of Fig. 12, but, for example, not the component 110g-1 of Fig. 12.

In some exemplary embodiments, Fig. 13, the apparatus 100h, e.g. its second signal processing stage 120-1c, comprises the components 120a, 120b, e.g. similar to the apparatus 100g of Fig. 12.

In some exemplary embodiments, Fig. 13, the apparatus 100h, e.g. its common RF processing stage 130-1c, comprises the components 130a, 130b, 130c, e.g. similar to the apparatus 100g of Fig. 12, and, additionally, further components 130d, 130e.

In some exemplary embodiments, component 130d is or comprises a processing unit configured to perform physical layer functions FUN-PHY-2, e.g. higher physical layer functions, e.g. as compared to the lower physical layer functions FUN-PHY-1, for signals associated with at least one of the communication COMM and the sensing SENS.

In some exemplary embodiments, component 130e is or comprises a processing unit configured to perform medium access layer functions FUN-MAC, e.g. lower medium access layer functions, for signals associated with at least one of the communication COMM and the sensing SENS.

In some exemplary embodiments, the processing unit 130d may comprise a first processing device 130d-1 for performing the physical layer functions FUN-PHY-2, e.g. the higher physical layer functions, for the communication COMM.

In some exemplary embodiments, the processing unit 130d may comprise a second processing device 130d-2 for performing the physical layer functions FUN-PHY-2, e.g. the higher physical layer functions, for the sensing SENS.

In some exemplary embodiments, the processing unit 130e may comprise a first processing device 130e-1 for performing the medium access layer functions FUN-MAC, e.g. lower medium access layer functions, for signals associated with the communication COMM.

In some exemplary embodiments, the processing unit 130e may comprise a second processing device 130e-2 for performing the medium access layer functions FUN-MAC, e.g. lower medium access layer functions, for signals associated with the sensing SENS.

In some exemplary embodiments, Fig. 13, the interface IF-1, e.g. in form of a logical interface, may be provided for information exchange, e.g. data exchange, between the control unit 140 and the processing unit 110f.

In some exemplary embodiments, Fig. 13, the interface IF-2, e.g. in form of a logical interface, may be provided for information exchange, e.g. data exchange, between the control unit 140 and the processing unit 130d.

In some exemplary embodiments, Fig. 13, a, for example physical, interface IF-4‴ may be provided, which provides at least an exchange of information, e.g. data and/or signals, between the first signal processing stage 110-1c and the common RF processing stage 130-1c, e.g. between the respective components 110f, 130e thereof.

In some exemplary embodiments, Fig. 13, the interface IF-4‴ can be used to exchange information related to a control plane CP (Fig. 10) and/or a user plane UP associated e.g. with the communication COMM.

In some exemplary embodiments, Fig. 13, a, for example physical, interface IF-6‴ may be provided, which provides at least an exchange of information, e.g. data and/or signals, between the second signal processing stage 120-1c and the common RF processing stage 130-1c, e.g. between the respective components 120b, 130e thereof.

In some exemplary embodiments, the configuration 100h of Fig. 13 enables to provide common processing of e.g. lower physical layer functionalities, e.g., OFDM modulation, and higher separate/common PHY (physical layer) and MAC functionalities, e.g., pilot insertion, managing a load of sensing and/or communication waveform /values (e.g. QoS (quality of service) and QoSe (quality of sensing)).

In some exemplary embodiments, Fig. 13, the apparatus 100h may be provided in form of a, for example single, module MOD-100h. In some exemplary embodiments, Fig. 13, the apparatus 100h, e.g. module MOD-100h, can e.g. be provided as a, for example versatile, communication device, e.g. V2X sensor, e.g. for vehicles, offering a combined functionality with respect to communication COMM and sensing SENS.

While in some exemplary embodiments, at least some of the components 110a, 110b, 110c, 110d, 110e, 110f, 110g, 110h, 120a, 120b, 120c, 120d, 130a, 130b, 130c, 130d of e.g. Fig. 10 to 13 can be arranged, e.g. distributed within and/or associated with at least one of the components 110-1, 110-2, 110-3, in some exemplary embodiments, the functionality of the components 110a, 110b, 110c, 110d, 110e, 110f, 110g, 110h, 120a, 120b, 120c, 120d, 130a, 130b, 130c, 130d as provided with some exemplary embodiments may be identical or at least similar as compared with other exemplary embodiments, in which at least one of the components 110a, 110b, 110c, 110d, 110e, 110f, 110g, 110h, 120a, 120b, 120c, 120d, 130a, 130b, 130c, 130d is arranged or distributed differently, e.g. to the components 110-1, 110-2, 110-3. Similar observations also apply with respect to the exemplary embodiments according to at least one of Fig. 1 to Fig. 9.

In some exemplary embodiments, a specific configuration of at least one of the components 110a, 110b, 110c, 110d, 110e, 110f, 110g, 110h, 120a, 120b, 120c, 120d, 130a, 130b, 130c, 130d of e.g. Fig. 10 to 13 can e.g. be adapted to a specific configuration 100e, 110f, 100g, 100h of the apparatus according to the embodiments. Similar observations also apply with respect to the exemplary embodiments according to at least one of Fig. 1 to Fig. 9.

In the following, exemplary aspects and embodiments inter alia related to waveforms or signals that can be used with the principle according to the embodiments are provided.

In some exemplary embodiments, there may be multiple variants how signals or waveforms, e.g. different signals or waveforms, e.g., for the communication COMM and the sensing SENS, could be differently or commonly processed.

In some exemplary embodiments, which may exemplarily be denoted as "Variant 1", a specific first signal or waveform WF-1 (see also Fig. 9B) may be used, may e.g. be generated, by a component of the first signal processing stage 110, 110-1, .... In some exemplary embodiments, the first waveform WF-1 may e.g. be dedicated, e.g. used, e.g. only, for the communication COMM, e.g. for transmission and/or reception of signals associated with the communication COMM.

In some exemplary embodiments, the first signal or waveform WF-1 can e.g. be processed by the components 110, 130, 110-1, 130-1 ..., e.g. with specific functionalities (e.g., functionalities specifically provided for the first waveform WF-1), and/or with a specific configuration or set of configuration, e.g. with respect to the common modules (i.e., the components commonly processing e.g. the first waveform WF-1 and, optionally, at least one further, e.g. second, waveform WF-2).

In other words, in some exemplary embodiments, at least one specific configuration for at least some of the components 110a, 110b, 110c, 110d, 110e, 110f, 110g, 110h, 120a, 120b, 120c, 120d, 130a, 130b, 130c, 130d may be provided, e.g. to control the processing of the first waveform WF-1.

In some exemplary embodiments, a second waveform WF-2 (Fig. 9B), which may e.g. be different from the first waveform WF-1, may be used, e.g. for the sensing SENS.

In some exemplary embodiments, the second waveform WF-2 may comprise a, for example completely, separate and/or different structure and/or physical design, e.g. as compared to the first waveform WF-1.

In the exemplary "Variant 1", the second waveform WF-2 can e.g. be processed with one or more, e.g. dedicated, e.g. specific, components or modules, e.g. of the second signal processing stage 120, 120-1, ....

In other words, in some exemplary embodiments, at least one specific configuration for at least some of the components 110a, 110b, 110c, 110d, 110e, 110f, 110g, 110h, 120a, 120b, 120c, 120d, 130a, 130b, 130c, 130d may be provided, e.g. to control the processing of the second waveform WF-2.

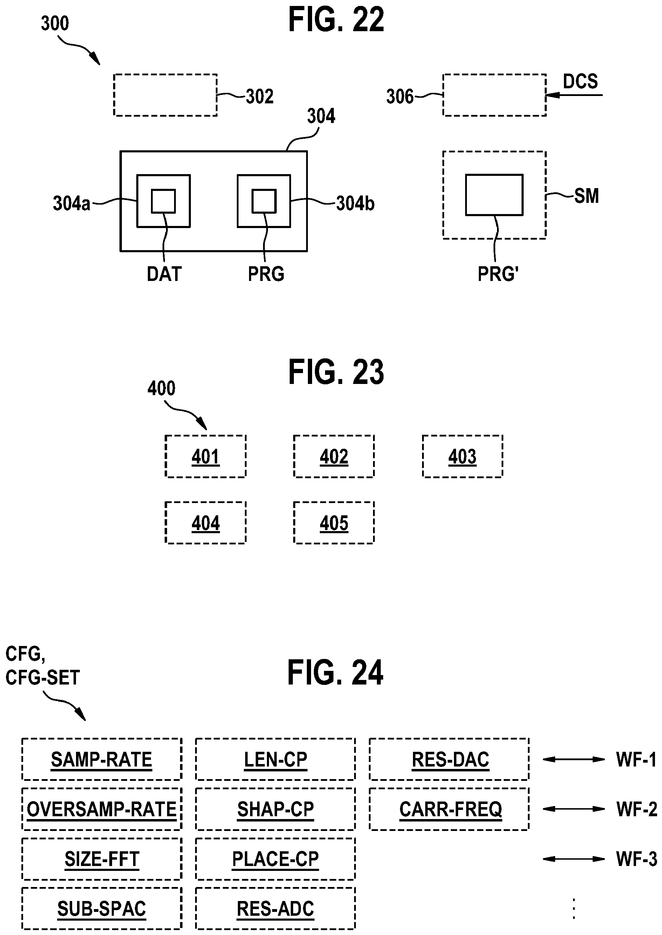

In some exemplary embodiments, Fig. 24, a configuration CFG or set CFG-SET of configuration parameters which may e.g. be used specifically for processing of one of the waveforms WF-1, WF-2 may e.g. comprise at least one of: a) a sampling rate SAMP-RATE, b) an oversampling rate OVERSAMP-RATE, c) an FFT (Fast Fourier Transform) size SIZE-FFT, d) a subcarrier spacing (e.g., a spacing in a frequency resource dimension, which may e.g. be partitioned into subcarriers, as e.g. provided in a 5G communication standard SUB-SPAC, e) a length of a cyclic prefix LEN-CP, f) a shape of a cyclic prefix SHAP-CP, g) an arrangement, e.g. placement, PLACE-CP of the cyclic prefix, h) a resolution RES-ADC of analog to digital conversion(s) ("ADC width"), i) a resolution RES-DAC of digital to analog conversion(s) ("DAC width"), j) carrier frequency CARR-FREQ, e.g. for upconversion(s) and/or downconversion(s).

In other words, in some exemplary embodiments, a specific signal or waveform may be associated with a specific configuration CFG or set CFG-SET of configuration parameters, e.g. for processing the specific signal or waveform WF-1 by at least one component of the apparatus according to the embodiments.

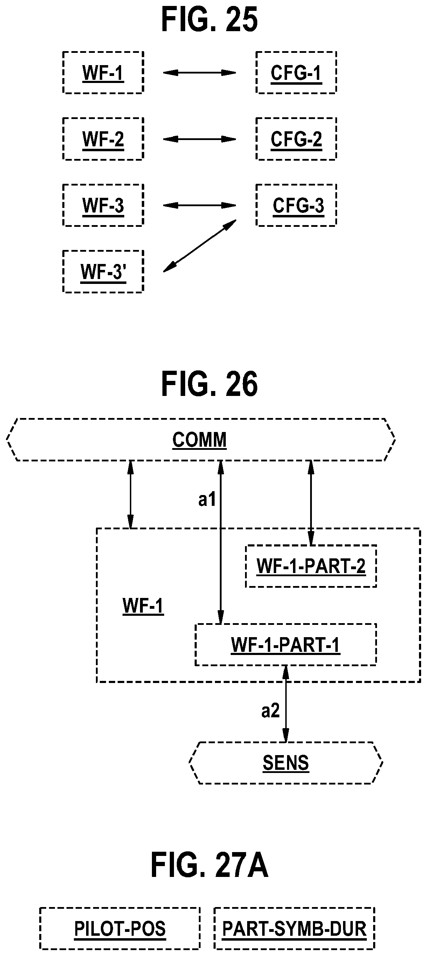

In other words, in some exemplary embodiments, a specific configuration CFG or set CFG-SET of configuration parameters may e.g. be used by the apparatus according to the embodiments or at least one component thereof for processing of the specific signal or waveform, see, for example, Fig. 25, which symbolizes that a first configuration CFG-1 is associated with (e.g., usable for processing of) a first signal or waveform WF-1, whereas a second configuration CFG-2 is associated with (e.g., usable for processing of) a second signal or waveform WF-2, and a third configuration CFG-3 is associated with (e.g., usable for processing of) a third signal or waveform WF-3.

In some exemplary embodiments, at least one configuration, presently for example the third configuration CFG-3, may also be used for more than one signal or waveform, presently e.g. for the third waveform WF-3 and a further waveform WF-3'.

In some exemplary embodiments, e.g. related to the abovementioned "Variant 1", the control unit 140 (Fig. 10) is configured to perform controlling and/or orchestrating an operation of at least some components 110-1, 120-1, 130-1 of the apparatus according to the embodiments, e.g. to effect a multiplexing of functionalities associated with the sensing SENS and of functionalities associated with the communication COMM.

In some exemplary embodiments, the control unit 140 is configured to perform the controlling and/or orchestrating with respect to, e.g. across, at least one of: a) different time slots (in which, in some exemplary embodiments, each may have a different OFDM modulation scheme), b) same time resources, e.g. time slots, but e.g. different frequency resources, e.g. carrier sub-bands (e.g., using a same OFDM modulation, e.g. to occupy different sub-bands), c) different frequency resources, e.g. different frequency bands and/or carriers (i.e., band 1 for communication COMM and band 2 for sensing SENS), e.g. using different OFDM modulation schemes, and/or different space resources and/or different code resources, but e.g. a same time and/or a same frequency, etc.

In some exemplary embodiments, which may exemplarily be denoted as "Variant 2", a specific first signal or waveform WF-1 (see also Fig. 9B) may be used, may e.g. be generated, e.g. by a component of the first signal processing stage 110-1 (Fig. 10).

In some exemplary embodiments, the first waveform WF-1 may e.g. be transmitted and/or received and/or processed by a plurality of the components 110a, 110b, 110c, 110d, 110e, 110f, 110g, 110h, 120a, 120b, 120c, 120d, 130a, 130b, 130c, 130d, e.g. throughout shared modules, e.g. protocol modules, e.g. with specific functionalities and/or with a specific configuration, e.g. set of configuration (i.e., using a specific configuration to conduct processing of the first waveform WF-1), e.g. for modules commonly used (e.g., both for processing the first waveform WF-1 and at least one further waveform WF-2), e.g. similar to "Variant 1".

In some exemplary embodiments, Fig. 26, e.g. additionally, at least a first part WF-1-PART-1 of the first waveform WF-1 may e.g. be used for sensing SENS (e.g., possibly for both for the communication COMM and the sensing SENS, see arrows a1, a2 of Fig. 26, or, in some exemplary embodiments, for the sensing SENS), e.g. using at least one of, see, for example, Fig. 27A: a) a specific pilot position PILOT-POS in time and/or frequency, b) a specific part of a symbol duration PART-SYMB-DUR.

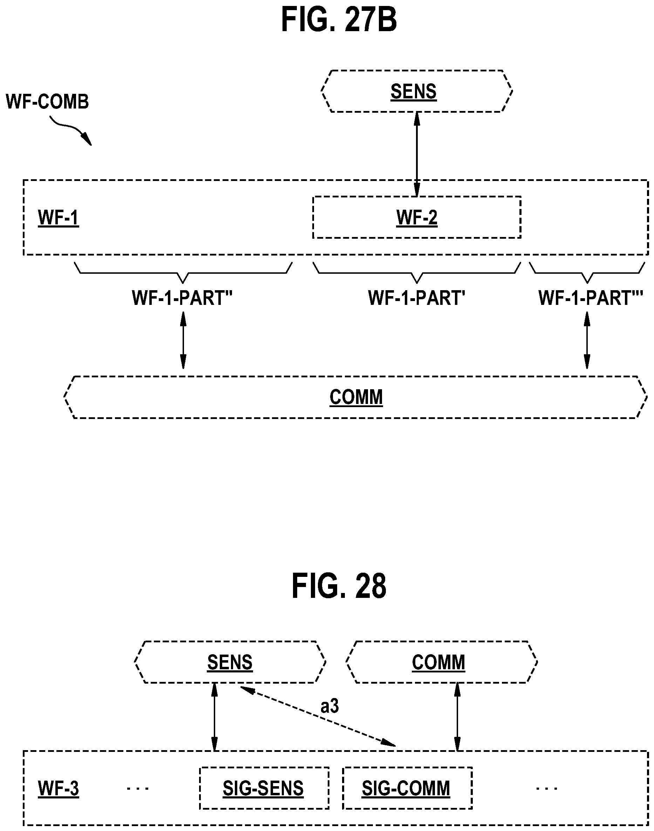

In some exemplary embodiments, using at least the first part WF-1-PART-1 of the first waveform WF-1 for sensing SENS, e.g. using at least one of, see, for example, Fig. 27A: a) a specific pilot position PILOT-POS in time and/or frequency, b) a specific part of a symbol duration PART-SYMB-DUR, may comprise corrupting/pre-empting a part WF-1-PART' (see Fig. 27B) of the first signal or waveform WF-1 and overriding it with the second waveform WF-2, which, in some exemplary embodiments, may be specific for, i.e. dedicated to, sensing SENS.

In other words, in some exemplary embodiments, Fig. 27B, the first waveform WF-1, which may e.g. be used for the communication COMM, may e.g. at least partly be used also for the sensing, or, at least some part WF-1-PART' or portion of the first waveform WF-1 may be "overwritten" or replaced by the second waveform WF-2. This way, in some exemplary embodiments, a "combined" waveform WF-COMB may be obtained which may e.g. at least partly be used for communication COMM and which may at least partly be used for sensing SENS.

As an example, in some exemplary embodiments, the further parts WF-1-PART", WF-1-PART" of the first waveform WF-1 may be used for the communication COMM.

In some exemplary embodiments, the optional control unit 140 (see, for example, Fig. 1) is configured to inform about corrupting, e.g. overwriting, one or more symbols e.g. of the first waveform WF-1, e.g. partially, e.g. with a sensing waveform, e.g. the second waveform WF-2.

In some exemplary embodiments, an indication of puncturing and/or pre-empting and/or corrupting may be used for the abovementioned informing of at least some of the components 110-1, 120-1, 130-1, wherein the indication of puncturing, pre-empting and/or corrupting may e.g. be provided by some accepted standard, e.g. wireless communication standard.

In some exemplary embodiments, the indication of puncturing, pre-empting and/or corrupting may be sent, e.g. signaled, to at least one receiver of signals associated with the communication COMM.

In some exemplary embodiments, a rate of corrupting the first waveform WF-1, e.g. with waveform WF-2, may e.g. depend on at least one of: a) QoS, b) QoSe, c) other aspects, e.g. optimization aspects.

In some exemplary embodiments, at least one of a rate, a scheme, position(s) for at least one of the puncturing, pre-empting and/or corrupting may e.g. be specified (e.g., by standardization) and/or configured (e.g., using at least one of layer 1 and/or layer 2 and/or layer 3 signaling) and/or signaled (e.g., using at least one of layer 1 and/or layer 2 and/or layer 3 signaling), e.g. for a communication protocol. In some exemplary embodiments, e.g. at a receiver, the combined or corrupted waveform WF-1, WF-COMB may e.g. be decoded with a best effort approach or repeated (duplicated) in a subsequent symbol.

In some exemplary embodiments, Fig. 28, which may exemplarily be denoted as "Variant 3", at least one signal SIG-COMM usable and/or used for the communication COMM and at least one signal SIG-SENS usable and/or used for the sensing SENS may use, e.g. share, and/or constitute a same signal or waveform, e.g. third waveform WF-3.

In some exemplary embodiments, Fig. 28, the third waveform WF-3 may e.g. carry data, e.g. associated with the communication COMM, and the third waveform WF-3 may also be used to conduct the sensing SENS, e.g. at the same time, e.g. using the same third waveform WF-3. In some exemplary embodiments, at least some of the data carrying portions of the third waveform WF-3 may e.g. also be used for the sensing SENS, see, for example, the dashed double arrow a3 of Fig. 28.

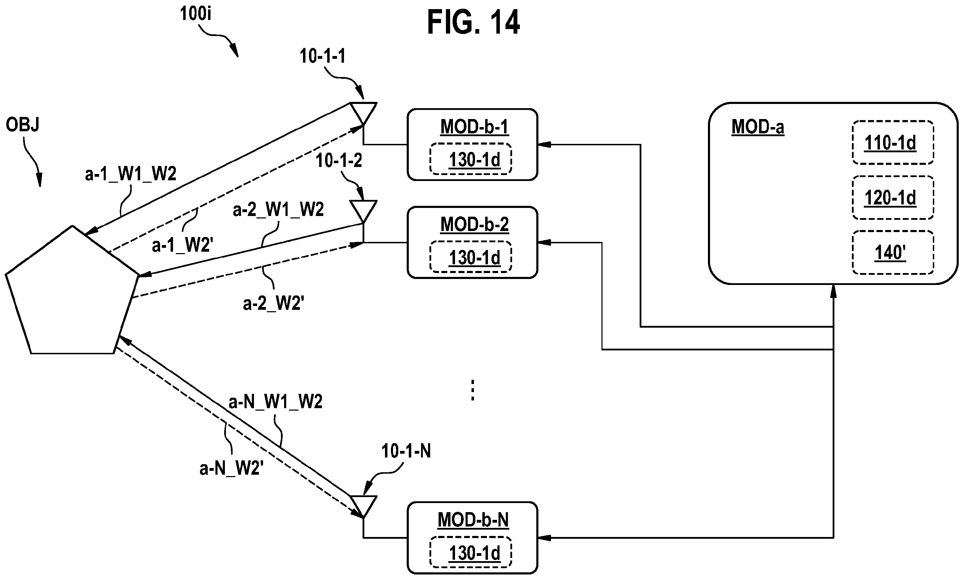

In some exemplary embodiments, the sensing SENS may e.g. be conducted based on at least one data-aided and/or reference symbol-aided and/or pilot symbol-aided scheme, e.g., where data symbols and/or inserted reference symbols and/or pilots of the third waveform WF-3 can be used, e.g. for detecting reflected waves, e.g., incident then reflected, from objects (OBJ, see Fig. 14), e.g. in an environment surrounding the apparatus according to the embodiments.

In other words, in some exemplary embodiments, RF signals associated with the third waveform WF-3 may be transmitted by the apparatus according to the embodiments, and at least a part of the so transmitted RF signals may e.g. be received by a receiver, e.g. in the sense of a communication between the apparatus according to the embodiments and the receiver.

In some exemplary embodiments, at least a part of the so transmitted RF signals may e.g. be reflected or scattered, e.g. by an object in the surroundings of the apparatus (e.g., reflections at the receiver for the communication COMM are also possible), and the reflected or scattered portion of the transmitted RF signals may e.g. be received by the apparatus according to the embodiments and may e.g. be used for the sensing SENS, the sensing e.g. comprising at least one of a) determining, e.g. estimating, a location of the object, e.g. receiver, b) determining, e.g. estimating, a velocity of the object, e.g. receiver.

In some exemplary embodiments, which may exemplarily be denoted as "Variant 4", a modulated signal or waveform can e.g. be used to carry communication signals, e.g. performing the communication COMM, see, for example, the first waveform WF-1 exemplarily explained above, wherein, in some exemplary embodiments, pilots, e.g. pilot signals, may be added to the first waveform WF-1 (e.g., for a transmission) and/or extracted from the first waveform-1 (e.g., when receiving a reflected or scattered portion of RF signals associated with the first waveform WF-1), e.g. to conduct and/or measure direct ranging and/or to calculate relative positioning to other (e.g., active) devices, e.g., in some exemplary embodiments, additionally or alternatively to sensing reflected signals from passive devices/surfaces/objects, as may e.g. occur, e.g. using at least one of the exemplarily discloses variants "Variant 1", "Variant 2", "Variant 3" above.

In the following, further exemplary embodiments and aspects of the principle according to the embodiments are disclosed, which may, according to further exemplary embodiments, be combined with each other and/or with at least one of the exemplary embodiments and aspects explained above.

In some exemplary embodiments, the apparatus according to the embodiments is configured to perform, e.g. integrated, communication COMM and sensing SENS, e.g. using at least one of a full-duplex mode or a half-duplex mode of operation.

Fig. 14 schematically depicts a simplified block diagram of an apparatus 100i according to exemplary embodiments. The apparatus 100i comprises a module MOD-a, e.g. a central module, e.g. for integrated communication and sensing. In some exemplary embodiments, the module MOD-a may e.g. be denoted as "integrated radio sensing central unit". In some exemplary embodiments, the module MOD-a, e.g. "integrated radio sensing central unit", may e.g. be provided in the form of a SoC.

In some exemplary embodiments, the apparatus 100i further comprises at least one further module MOD-b-1, e.g. a decentral and/or distributed module, e.g. for integrated communication and sensing. In some exemplary embodiments, the at least one further module MOD-b-1 may e.g. be denoted as "integrated radio sensing distributed unit". In some exemplary embodiments, the at least one further module MOD-b-1, e.g. "integrated radio sensing distributed unit", may e.g. be provided in the form of a SoC.

Presently, in the illustrative and not limiting example of Fig. 14, the apparatus 100i comprises the module MOD-a and N many, N= 1, 2, .., N further modules, only three of which, e.g. further modules MOD-b-1, MOD-b-2, .., MOD-b-N, are depicted for clarity.

In some exemplary embodiments, Fig. 14, the module MOD-a may e.g. comprise at least one of: a) a first signal processing stage 110-1d configured to process (see also block 200 of Fig. 9A) signals COMM-sig associated with communication COMM, b) a second signal processing stage 120-1d configured to process 202 signals SENS-sig associated with sensing SENS, c) a control unit 140'.

In some exemplary embodiments, Fig. 14, the first signal processing stage 110-1d may comprise a configuration identical or similar to at least one of the first signal processing stages 110 (Fig. 6), 110-1 (Fig. 10), 110-1a (Fig. 11), 110-1b (Fig. 12), 110-1c (Fig. 13) exemplarily disclosed above.

In some exemplary embodiments, Fig. 14, the second signal processing stage 120-1d may comprise a configuration identical or similar to at least one of the second signal processing stages 120 (Fig. 7), 120-1 (Fig. 10), 120-1a (Fig. 11), 120-1b (Fig. 12), 120-1c (Fig. 13) exemplarily disclosed above.

In some exemplary embodiments, Fig. 14, the control unit 140' may comprise a configuration identical or similar to the optional control unit 140 explained above with respect e.g. to Fig. 1 et seq..

In some exemplary embodiments, Fig. 14, the at least one further module MOD-b-1, MOD-b-2, .., MOD-b-N may e.g. comprise at least one common radio frequency, RF, processing stage 130-1d for processing 204 (Fig. 9A) RF signals RF-sig associated with at least one of communication COMM and sensing SENS.

In some exemplary embodiments, Fig. 14, the at least one common radio frequency, RF, processing stage 130-1d may comprise a configuration identical or similar to at least one of the common RF processing stages 130 (Fig. 8), 130-1 (Fig. 10), 130-1a (Fig. 11), 130-1b (Fig. 12), 130-1c (Fig. 13) exemplarily disclosed above.

Element 10-1-1 of Fig. 14 symbolizes an antenna system associated with (e.g. usable by) the module MOD-b-1. Element 10-1-2 of Fig. 14 symbolizes an antenna system associated with (e.g. usable by) the module MOD-b-2. Element 10-1-N of Fig. 14 symbolizes an antenna system associated with (e.g. usable by) the module MOD-b-N.

In some exemplary embodiments, Fig. 14, the at least one further module MOD-b-1, MOD-b-2, .., MOD-b-N is configured to perform and/or comprises a full-duplex communication (FDC) and/or full-duplex radio (FDR), e.g. to transmit RF signals associated with the communication COMM and the sensing SENS, and/or to receive, at least, reflected signal portions, e.g. echoes, e.g. simultaneously or in an at least partly temporally overlapping fashion, e.g. with respect to the transmission of the RF signals associated with the communication COMM and the sensing SENS.

As an example, in Fig. 14, the arrow a-1_W1_W2 symbolizes a transmission of the module MOD-b-1 of RF signals associated with the communication COMM (e.g., using the first waveform WF-1) and a transmission of RF signals associated with the sensing SENS (e.g., using the second waveform WF-2). Similarly, in Fig. 14, the arrow a-2_W1_W2 symbolizes a transmission of the module MOD-b-2 of RF signals associated with the communication COMM (e.g., using the first waveform WF-1) and a transmission of RF signals associated with the sensing SENS (e.g., using the second waveform WF-2), and the arrow a-N_W1_W2 symbolizes a transmission of the module MOD-b-N of RF signals associated with the communication COMM (e.g., using the first waveform WF-1) and a transmission of RF signals associated with the sensing SENS (e.g., using the second waveform WF-2).

As a further example, the arrows a-1_W2', a-1_W2', a-N_W2' symbolize respective reflections of at least a portion of the RF signals symbolized by the arrows a-1_W1_W2, a-2_W1_W2, a-N_W1_W2 at an object OBJ.

In some exemplary embodiments, the object OBJ may represent or form part of a receiver of the communication COMM as transmitted by the apparatus 100i, e.g. via at least one of the (further) modules MOD-b-1, MOD-b-2, .., MOD-b-N.

In some exemplary embodiments, the object OBJ may not represent or may not form part of a receiver of the communication COMM as transmitted by the apparatus 100i, e.g. via at least one of the (further) modules MOD-b-1, MOD-b-2, .., MOD-b-N, but may rather represent another object, e.g. not related to communication, such as e.g. a part of a structure (e.g., building or vehicle or the like).

In some exemplary embodiments, the apparatus 100i may e.g. use the different, e.g. distributed, modules MOD-b-1, MOD-b-2, .., MOD-b-N, e.g. to schedule and/or perform transmissions, and/or to receive, e.g. from different modules MOD-b-1, MOD-b-2, .., MOD-b-N, e.g. simultaneously and/or in a scheduled, e.g. synchronized manner. In some exemplary embodiments, the control unit 140', e.g. orchestrator, may be configured to orchestrate an operation of the components of the apparatus 100i, e.g. for the transmission and/or receiving.

In some exemplary embodiments, the different, e.g. distributed, modules MOD-b-1, MOD-b-2, .., MOD-b-N may comprise respective RF processing stages 130-1d of identical or similar or different types.

In some exemplary embodiments, at least some of the different, e.g. distributed, modules MOD-b-1, MOD-b-2, .., MOD-b-N may e.g. be arranged spatially separate from each other, e.g. in different positions or locations.

In some exemplary embodiments, e.g. related - but not restricted - to the apparatus 100i of Fig. 14, at least one of the following two cases, "Case 1", "Case 2", may be considered:
"Case 1": In some exemplary embodiments, a full-duplex capability for at least some components, e.g. some modules MOD-b-1, MOD-b-2, .., MOD-b-N, of the apparatus 100i is provided. In some exemplary embodiments, at least some of the (further) modules MOD-b-1, MOD-b-2, .., MOD-b-N, are capable of, e.g. configured to, transmit RF signals associated with the first waveform WF-1 and the second waveform WF-2, while at least some of the (further) modules MOD-b-1, MOD-b-2, .., MOD-b-N, are capable of, e.g. configured to, e.g. simultaneously (e.g., with respect to transmitting), receive a reflected version or portion of the second waveform WF-2, see, for example, the arrows a-1_W2', a-1_W2', a-N_W2'.

In some exemplary embodiments, e.g. in relation to the abovementioned "Case 1", a full duplex capability reception may e.g. be applied, e.g. mandated.

In some exemplary embodiments, e.g. in relation to the abovementioned "Case 1", the second waveform WF-2 may e.g. have at least one of a) an on/off structure (e.g., a non-continuous waveform or signal shape), or b) a continuous waveform, where, for example, at least some of the modules MOD-b-1, MOD-b-2, .., MOD-b-N are configured to transmit RF signals a-1_W1_W2, a-2_W1_W2 ... associated with the second waveform WF-2 (e.g., during an on-time of the on/off structure) and to receive reflections a-1_W2', a-2_W2', .. back (e.g., during an off-time of the on/off structure).

In other words, in some exemplary embodiments, a reception of the reflection(s) a-1_W2', a-2_W2', .. associated with the second waveform WF-2 may be done using a full-duplex capability, e.g., while transmitting RF signals associated with the first waveform WF-1 and/or with the second waveform WF-2. As an example, the reception and/or the processing of the reflection(s) or echo(es) may e.g. be performed in a full duplex manner.

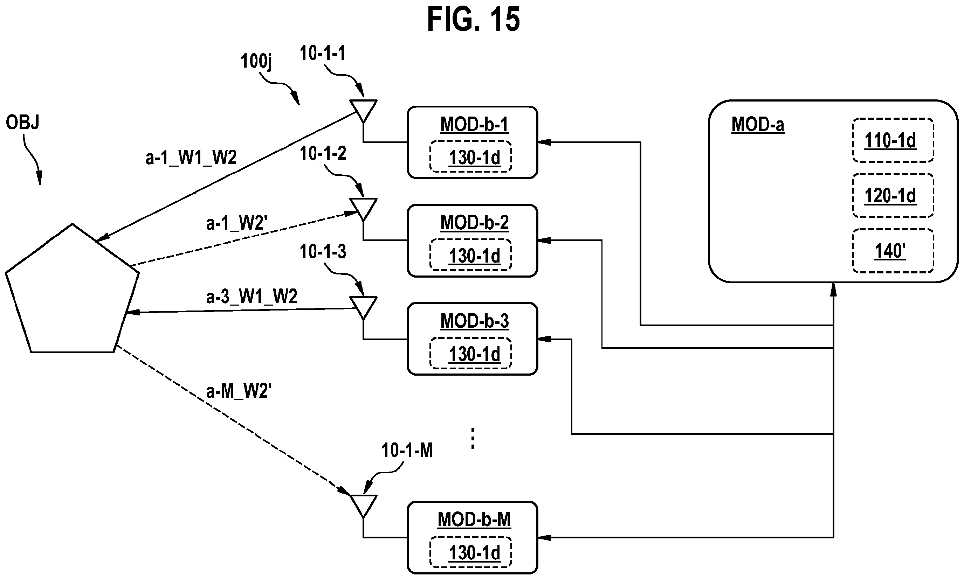

Fig. 15 schematically depicts a simplified block diagram of an apparatus 100j according to exemplary embodiments. The apparatus 100j comprises a configuration similar to the apparatus 100i of Fig. 14, having a, for example central, module MOD-a, and a plurality of, presently M many, M >= 2, further modules MOD-b-1, MOD-b-2, MOD-b-3, ..., MOD-b-M.

Element 10-1-1 of Fig. 15 symbolizes an antenna system associated with (e.g. usable by) the module MOD-b-1. Element 10-1-2 of Fig. 15 symbolizes an antenna system associated with (e.g. usable by) the module MOD-b-2. Element 10-1-3 of Fig. 15 symbolizes an antenna system associated with (e.g. usable by) the module MOD-b-3. Element 10-1-M of Fig. 15 symbolizes an antenna system associated with (e.g. usable by) the module MOD-b-M.

"Case 2": In some exemplary embodiments 100j, Fig. 15, a distributed half-duplex capability may be provided, wherein a first number, e.g. set, of the modules MOD-b-1, MOD-b-2, .., MOD-b-M is configured to transmit RF signals associated with the first waveform WF-1 and/or with the second waveform WF-2, see the arrows a-1_W1_W2, a-3_W1_W2, and a second number, e.g. another set of the modules MOD-b-1, MOD-b-2, .., MOD-b-M is configured to receive reflected signals a-1_W2', a-M_W2' associated with the second waveform WF-2. In some exemplary embodiments, the first number of modules comprises the modules MOD-b-1, MOD-b-3, and the second number of modules comprises the modules MOD-b-2, MOD-b-M.

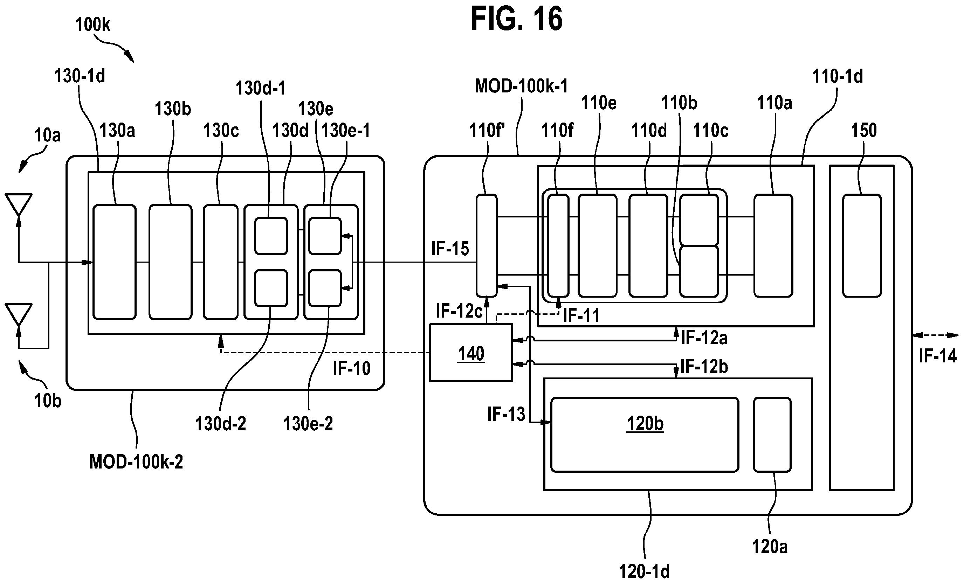

Fig. 16 schematically depicts a simplified block diagram of an apparatus 100k according to exemplary embodiments. The apparatus 100k comprises a first module MOD-100k-1, e.g. a central module, e.g. for integrated communication and sensing, and at least one second module MOD-100k-2, e.g. a distributed module, e.g. for integrated communication and sensing.

In some exemplary embodiments, Fig. 16, the first module MOD-100k-1 comprises a first signal processing stage 110-1d, which is configured to process 200 (Fig. 9A) signals COMM-sig associated with communication COMM, e.g. identical or at least similar to the first signal processing stage 110 explained above with respect e.g. to Fig. 1.

In some exemplary embodiments, Fig. 16, a second signal processing stage 120-1d is provided, which is configured to process 202 signals SENS-sig associated with sensing SENS, e.g. identical or at least similar to the second signal processing stage 120 explained above with respect e.g. to Fig. 1.

In some exemplary embodiments, the apparatus 100k of Fig. 16 comprises a common RF processing stage 130-1d, e.g. within the second module MOD-100k-2, for processing 204 RF signals RF-sig associated with at least one of communication COMM and sensing SENS, e.g. identical or at least similar to the common RF processing stage 130 explained above with respect e.g. to Fig. 1.

Element 10a of Fig. 16 symbolizes a first antenna system associated with, e.g. usable by, the common RF processing stage 130-1d. Element 10b of Fig. 16 symbolizes a second antenna system associated with, e.g. usable by, the common RF processing stage 130-1d.

In some exemplary embodiments, Fig. 16, the apparatus 100k, e.g. the first signal processing stage 110-1d, comprises the components 110a, 110b, 110c, 110d, 110e, 110f, which have already been explained above, e.g. with respect to Fig. 6, Fig. 10 et seq.

Element 110f' of Fig. 16 symbolizes an optional processing unit, e.g. mixer or multiplexer, which is configured to process data associated with, for example lower level, medium access functions, e.g. related to the signal processing stages 110-1d, 120-1d.

In some exemplary embodiments, Fig. 16, the apparatus 100k, e.g. the second signal processing stage 120-1d, comprises the components 120a, 120b, which have already been explained above, e.g. with respect to Fig. 7, Fig. 10 et seq..

In some exemplary embodiments, Fig. 16, the apparatus 100k, e.g. the common RF processing stage 130-1d, comprises the components 130a, 130b, 130c, 130d, 130e, which have already been explained above, e.g. with respect to Fig. 8, Fig. 10 et seq..

In some exemplary embodiments, Fig. 16, the control unit 140 may e.g. be provided in the first module MOD-100k-1.

In some exemplary embodiments, an interface, e.g. logical interface, IF-10 (unidirectional or bidirectional) may be provided, e.g. for an information exchange, e.g. data exchange, between the control unit 140 and the common RF processing stage 130-1d.

In some exemplary embodiments, an interface, e.g. logical interface, IF-11 (unidirectional or bidirectional) may be provided, e.g. for an information exchange, e.g. data exchange, between the control unit 140 and the processing unit 110f.

In some exemplary embodiments, an interface, e.g. physical interface, IF-12a (unidirectional or bidirectional) may be provided, e.g. for an information exchange, e.g. data exchange, between the control unit 140 and the first signal processing stage 110-1d.

In some exemplary embodiments, an interface, e.g. physical interface, IF-12b (unidirectional or bidirectional) may be provided, e.g. for an information exchange, e.g. data exchange, between the control unit 140 and the second signal processing stage 120-1d.

In some exemplary embodiments, an interface, e.g. physical interface, IF-12c (unidirectional or bidirectional) may be provided, e.g. for an information exchange, e.g. data exchange, between the control unit 140 and the processing unit 110f'.

In some exemplary embodiments, an interface, e.g. physical interface, IF-13 (unidirectional or bidirectional) may be provided, e.g. for an information exchange, e.g. data exchange, between the processing unit 110f' and the processing unit 120b.

In some exemplary embodiments, an interface, e.g. physical interface, IF-14 (unidirectional or bidirectional) may be provided, e.g. for an information exchange, e.g. data exchange, between the apparatus 100k, e.g. the first module MOD-100k-1, and a target system, e.g. vehicle, or a component, e.g. electronic control unit, ECU, of a target system.

In some exemplary embodiments, an interface, e.g. physical interface, IF-15 (unidirectional or bidirectional) may be provided, e.g. for an information exchange, e.g. data exchange, between the first module MOD-100k-1, e.g. the processing unit 110f', and the second module MOD-100k-2, e.g. the processing unit 130e.

In some exemplary embodiments, the interface IF-15 may be a digital interface.

In some exemplary embodiments, the interface IF-15 may be, e.g. jointly, used for at least one of: communications COMM, sensing SENS, control/orchestration.

In some exemplary embodiments, the interface IF-15 may carry MAC, e.g. higher MAC, control plane data and/or user plane data.

In some exemplary embodiments, the interface IF-15 may carry sensing configuration (e.g., control) and/or sensing parameters, and/or processed reflected detections associated with the sensing SENS.

In some exemplary embodiments, Fig. 16, the control unit 140 may be configured to configure and/or at least some of common functionalities and specific functionalities related to the communication COMM and/or the sensing SENS, e.g. related to the second module MOD-100k-2.

In some exemplary embodiments, Fig. 16, control signals provided by the control unit 140, e.g. for the second module MOD-100k-2, may e.g. be conveyed via the interface IF-15 between the first module MOD-100k-1 and the second module MOD-100k-2.

In some exemplary embodiments, Fig. 16, block 150 symbolizes at least one of: a) shared non access stratum, NAS, parameters, b) network access parameters, c) information related to RRC, e.g. quality of service, QoS, d) information related to quality of sensing QoSe.

Further exemplary embodiments, Fig. 17, relate to a vehicle 20, for example a car or truck, comprising at least one apparatus 100l according to the embodiments. In some exemplary embodiments, the apparatus 100l of Fig. 17 may comprise the configuration of any of the apparatus 100, 100a, 100b, ... exemplarily disclosed above.

In some exemplary embodiments, Fig. 17, the apparatus 100l comprises a, for example central, primary unit UN-1, which e.g. comprises at least the first signal processing stage 110 (Fig. 1) (or, for example the first signal processing stage 110-1d of Fig. 16) and the second signal processing stage 120 (or, for example the second signal processing stage 120-1d of Fig. 16) and, optionally, the control unit 140.

In some exemplary embodiments, Fig. 17, the apparatus 100l comprises at least one, for example distributed, secondary unit UN-2a, UN-2b, UN-2c, UN-2d (presently, for example, four secondary units UN-2a, UN-2b, UN-2c, UN-2d), which, e.g. each of which, comprises at least one common radio frequency, RF, processing stage 130 (see, for example, Fig. 1) (or, for example, the common RF processing stage 130-1d of Fig. 16). In some exemplary embodiments, Fig. 17, the units UN-1, UN-2a, UN-2b, ... may e.g. be used, see the optional block 234 of Fig. 9D, for communication COMM and/or sensing SENS, wherein a data exchange between the units UN-1, UN-2a, UN-2b, ... may e.g. be attained by means of the interface IF-15.

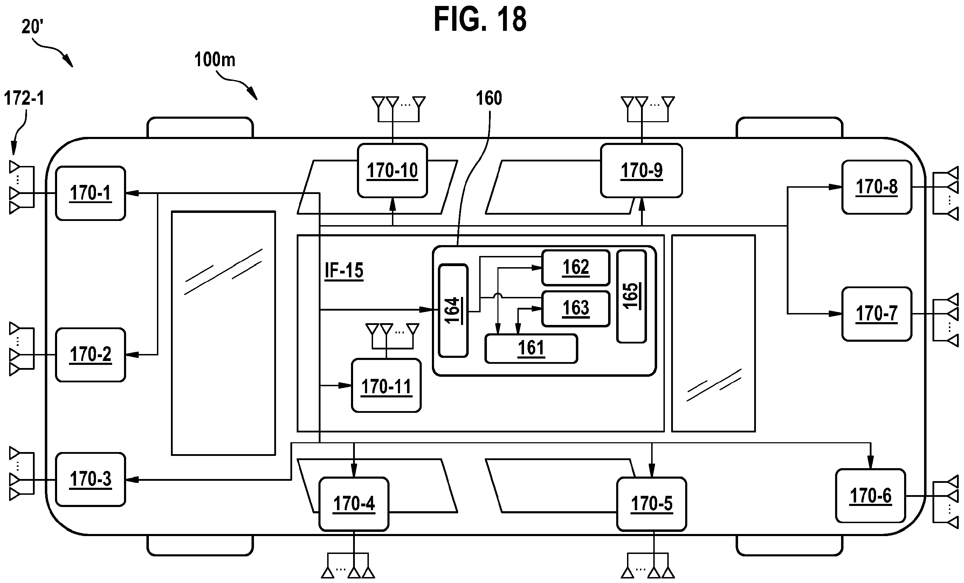

Further exemplary embodiments, Fig. 18, relate to a vehicle 20', for example a car or truck, comprising at least one apparatus 100m according to the embodiments. In some exemplary embodiments, the apparatus 100m of Fig. 18 may comprise a configuration identical or similar to any of the apparatus 100, 100a, 100b, ... exemplarily disclosed above.

In some exemplary embodiments, the apparatus 100m may comprise a central unit 160 for communication and sensing, e.g. an integrated radio and sensing central unit. In some exemplary embodiments, the central unit 160 of Fig. 18 may comprise a configuration similar or identical to the configuration MOD-100k-1 of Fig. 16.

In some exemplary embodiments, the apparatus 100m may comprise a plurality of, presently for example eleven, distributed units 170-1, 170-2, .., 170-11, e.g. distributed integrated units for communication and sensing. In some exemplary embodiments, at least one of the distributed units 170-1, 170-2, .., 170-11 may comprise a configuration similar or identical to the configuration MOD-100k-2 of Fig. 16.

In some exemplary embodiments, Fig. 18, at least one of the distributed units 170-1, 170-2, .., 170-11 comprises an antenna system 172-1 for transmitting and/or receiving radio frequency signals associated with at least one of the communication COMM and the sensing SENS. In some exemplary embodiments, several ones, for example all, of the distributed units 170-1, 170-2, .., 170-11 may comprise an respective antenna system 172-1. Note that for the sake of clarity, only the antenna system 172-1 is individually denoted with a reference sign for clarity.

In some exemplary embodiments, Fig. 18, an interface, e.g. physical interface, IF-15 (unidirectional or bidirectional) may be provided, e.g. for an information exchange, e.g. data exchange, between the central unit 160 and at least one of the distributed units 170-1, 170-2, .., 170-11.

In some exemplary embodiments, as exemplarily depicted by Fig. 18, the distributed units 170-1, 170-2, .., 170-11 may e.g. be arranged in one or more peripheral sections of the vehicle 20'. As an example, the distributed units 170-1, 170-2, 170-3 are arranged in a front section of the vehicle 20', the distributed units 170-4, 170-5 are arranged in a first side section of the vehicle 20', the distributed units 170-6, 170-7, 170-8 are arranged in a rear section of the vehicle 20', the distributed units 170-9, 170-10 are arranged in a second side section of the vehicle 20' opposite to the first side section, and the distributed unit 170-11 is arranged in a roof-top section of the vehicle 20'. Note that in further exemplary embodiments, other arrangements and/or distributions of the units 160, 170-1, .., 170-11 may be provided. Note that in further exemplary embodiments, more or less than the exemplarily depicted eleven distributed units 170-1, 170-2, .., 170-11 may be provided.

In some exemplary embodiments, the central unit 160 comprises a control unit 161, e.g. configured to perform a control and/or orchestration of communication and sensing, e.g. similar to the control unit 140 exemplarily disclosed above.

In some exemplary embodiments, the central unit 160 comprises a processing unit 162 for processing higher layers associated with the communication COMM.

In some exemplary embodiments, the central unit 160 comprises a processing unit 163 for performing processing associated with the sensing SENS.

In some exemplary embodiments, the central unit 160 comprises a processing unit 164 configured to control the interface IF-15 to the distributed units 170-1, .., 170-11.

In some exemplary embodiments, the central unit 160 comprises a processing unit 165 configured to process information and/or data associated with at least one of: a) Shared non access stratum (NAS) parameters (e.g., shared, e.g. usable by, both the communication COMM and the sensing SENS), b) shared network parameters, c) shared radio resource control (RRC) parameters, d) data, e) QoS, f) QoSe.

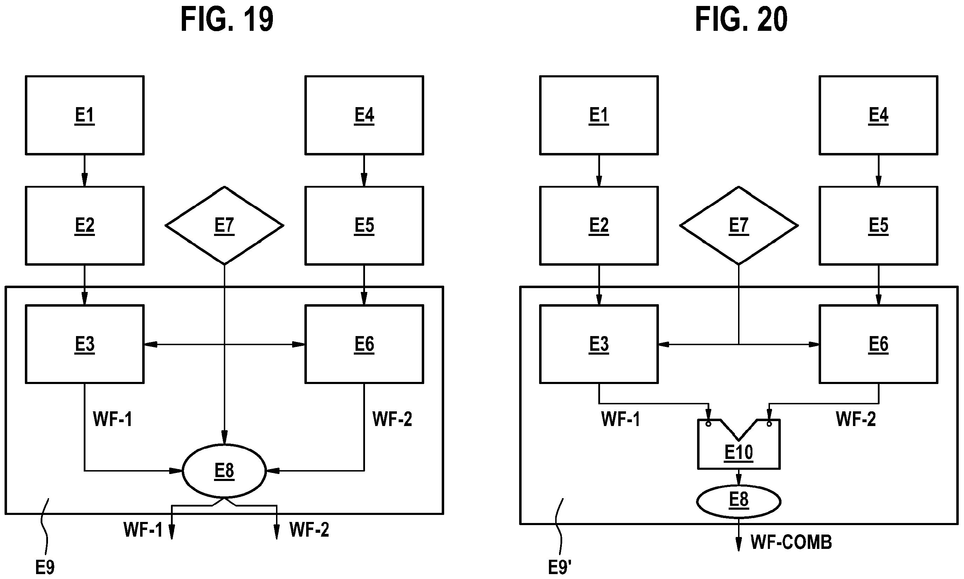

The exemplary flow-chart of Fig. 19 illustrates further exemplary aspects and embodiments, e.g. with respect to exemplary "Variant 1" mentioned above. In Fig. 19, element E1 symbolizes at least one of: a) communication modules, b) higher layer functions associated with the communication COMM, c) requirements associated with the communication COMM. Element E2 symbolizes at least one communication protocol. Element E3 symbolizes exemplary functionalities associated with the communication COMM. Element E4 symbolizes requirements associated with the sensing SENS. Element E5 symbolizes at least one protocol associated with the sensing SENS. Element E6 symbolizes exemplary functionalities associated with the sensing SENS. Element E7 symbolizes a control, for example orchestration, of the blocks E3, E6 and of an exemplary transmit (and/or receive) medium E8.

As can be seen from Fig. 19, in some exemplary embodiments, the first waveform WF-1 is provided by block E3 to the transmit and/or receive medium E8, and the second waveform WF-2 is provided by block E6 to the transmit and/or receive medium E8. In some exemplary embodiments, the blocks E3, E6, E8 of Fig. 19 may e.g. be associated with, for example integrated in, a distributed unit E9, see, for example, reference signs 170-1, 170-2, ... of Fig. 17.

The exemplary flow-chart of Fig. 20 illustrates further exemplary aspects and embodiments, e.g. with respect to exemplary "Variant 2" mentioned above. In Fig. 19, elements E1, E2, E3, E4, E6, E6, E7, E8 of Fig. 19 correspond with elements E1, E2, E3, E4, E6, E6, E7, E8 of Fig. 18. Element E10 combines the waveforms WF-1, WF-2 with each other, e.g. for providing a so obtained combination, e.g. a first waveform WF-1 of carrying the second waveform WF-2, or a combined waveform WF-COMB (see, for example, also Fig. 26, 27B), to the transmit and/or receive medium E8.

In some exemplary embodiments, the blocks E3, E6, E8, E10 of Fig. 20 may e.g. be associated with, for example integrated in, a distributed unit E9', see, for example, reference signs 170-1, 170-2, ... of Fig. 17.

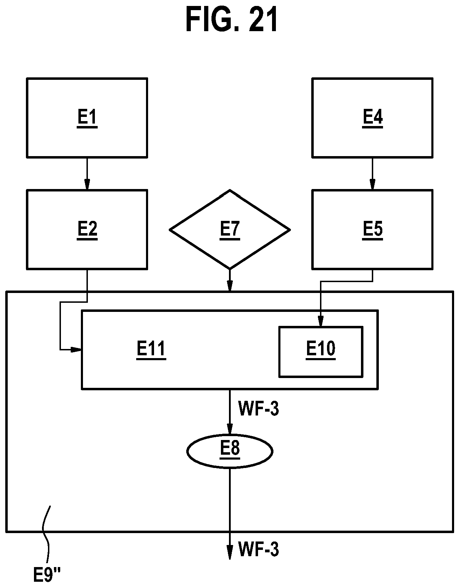

The exemplary flow-chart of Fig. 21 illustrates further exemplary aspects and embodiments, e.g. with respect to exemplary "Variant 3" mentioned above. In Fig. 20, elements E1, E2, E4, E5, E7 correspond with elements E1, E2, E4, E5, E7 of Fig. 18. Element E10 of Fig.21 symbolizes sensing functionalities, and element E11 of Fig. 21 symbolizes communication functionalities. In some exemplary embodiments, the block E11 is configured to provide the third waveform WF-3 (see, for example also Fig. 28), e.g. to the transmit and/or receive medium E8.

In some exemplary embodiments, the blocks E8, E10, E11 of Fig. 21 may e.g. be associated with, for example integrated in, a distributed unit E9", see, for example, reference signs 170-1, 170-2, ... of Fig. 17.

Fig. 22 schematically depicts an exemplary configuration 300. In some exemplary embodiments, e.g. the optional control unit 140, 140' and/or at least one further component of the apparatus according to exemplary embodiments may comprise a configuration identical or at least similar to the configuration 300 of Fig. 22. As an example, one or more of the units, e.g. processing units, 110a, 110b, ..., 120a, 120b, ..., 130a, 130b, ... may e.g. comprise a configuration identical or at least similar to the configuration 300 of Fig. 22. In some exemplary embodiments, one or more components of the apparatus according to exemplary embodiments may e.g. be implemented using the exemplary configuration 300 of Fig. 22.

In some exemplary embodiments, Fig. 22, the configuration 300 comprises at least one calculating unit, e.g. processor, 302 and at least one memory unit 304 associated with (i.e., usable by) said at least one calculating unit 302, e.g. for at least temporarily storing a computer program PRG and/or data DAT, wherein said computer program PRG is e.g. configured to at least temporarily control an operation of at least one component of the apparatus 100, 100a, ... according to exemplary embodiments (or, for example, of a unit, e.g. processing unit, thereof), e.g. related to aspects of a method according to exemplary embodiments.

In some exemplary embodiments, Fig. 22, the at least one calculating unit 302 comprises at least one core (not shown) for executing the computer program PRG or at least parts thereof, e.g. for executing a method according to exemplary embodiments or at least one or more aspects, e.g. steps, thereof.

According to further exemplary embodiments, the at least one calculating unit 302 may comprise at least one of the following elements: a microprocessor, a microcontroller, a digital signal processor (DSP), a programmable logic element (e.g., FPGA, field programmable gate array), an ASIC (application specific integrated circuit), hardware circuitry, a graphics processing unit (GPU). According to further preferred embodiments, any combination of two or more of these elements is also possible.

According to further exemplary embodiments, the memory unit 304 comprises at least one of the following elements: a volatile memory 304a, particularly a random-access memory (RAM), a non-volatile memory 304b, particularly a Flash-EEPROM.

In some exemplary embodiments, the computer program PRG is at least temporarily stored in the non-volatile memory 304b. Data DAT (e.g. associated with the processing of information and/or data and/or signals related to at least one of the communication COMM and the sensing SENS), which may e.g. be used for executing aspects of a method according to exemplary embodiments, may at least temporarily be stored in the RAM 304a.

In some exemplary embodiments, an optional computer-readable storage medium SM comprising instructions, e.g. in the form of a further computer program PRG', may be provided, wherein the further computer program PRG', when executed by a computer, i.e. by the calculating unit 302, may cause the computer 302 to carry out the method according to the embodiments. As an example, the storage medium SM may e.g. comprise or represent a digital storage medium such as a semiconductor memory device (e.g., solid state drive, SSD) and/or a magnetic storage medium such as a disk or hard disk drive (HDD) and/or an optical storage medium such as a compact disc (CD) or DVD (digital versatile disc) or the like.

In some exemplary embodiments, the configuration 300 may comprise an optional data interface 306, e.g. for unidirectional or bidirectional data exchange, e.g. with an external device (not shown, e.g. an electronic control unit of a target system such as the vehicle 20, 20', and/or a further component of the apparatus according to exemplary embodiments). As an example, by means of the data interface 306, a data carrier signal DCS may be received, e.g. from the external device, for example via a wired or a wireless data transmission medium, e.g. over a (virtual) private computer network and/or a public computer network such as e.g. the Internet.

In some exemplary embodiments, the data carrier signal DCS may represent or carry the computer program PRG, PRG' according to exemplary embodiments, or at least a part thereof.

Further exemplary embodiments, Fig. 23, relate to a use 400 of the apparatus according to the embodiments and/or of the module according to the embodiments and/or of the method according to the embodiments and/or of the vehicle according to the embodiments for at least one of: a) processing 401 RF signals associated with at least one of communication COMM and sensing SENS by means of the at least one common radio frequency, RF, processing stage, b) providing 402 joint, for example integrated, communication COMM and sensing SENS, c) splitting 403 a respective protocol stack, for example a lower protocol stack, for communication COMM and sensing SENS, d) controlling 404, e.g. commonly controlling, e.g. orchestrating, communication COMM and sensing SENS, e) sharing 405 an analog interface associated with the at least one common RF, processing stage between communication COMM and sensing SENS.

In some exemplary embodiments, the principle according to the embodiments can e.g. be used for at least one of the following aspects:
Aspect E1: In some exemplary embodiments, a, for example joint communication and sensing, protocol stack may be split into E1a) a common distributed unit, e.g. with multiple common functionalities and some specific integrated sub-modules, and E1b) a central unit with specific signal/data/control processing, e.g. with a joint communication and sensing control/ orchestration module, see, for example, the optional control unit 140.
Aspect E2: In some exemplary embodiments, an interface between distributed units and a central unit may e.g. be specified to integrate at least one of: E2a) communication and sensing digital protocol values, e.g. including I/Q samples and/or bit streams, E2b) at least one waveform for sensing, data, and control.
Aspect E3: In some exemplary embodiments, distributed units or modules are integrating communication COMM and sensing SENS functionalities, e.g. across selected protocol layers/sub-layers, which may e.g. be dedicated, e.g. for the design of the distributed units. In some exemplary embodiments, at least some specific aspects can e.g. also be separated, e.g. from the abovementioned integrated aspects.
Aspect E4: In some exemplary embodiments, a centralized module comprises at least one of: E4a) a network/parameters/quality requirements exposure, E4b) specific higher layers communication modules, E4c) specific RADAR processing and detection modules (e.g., for the sensing SENS), and E4d) a common orchestration module, e.g. control unit 140. In some exemplary embodiments, also a, for example common, higher layer processing and functionality module may be provided, e.g. for a fully integrated service.
Aspect E5: In some exemplary embodiments, a distributed unit may be connected to an antenna system, e.g. comprising at least one antenna or antenna array, e.g. dedicated to multiplex and/or transmit and/or receive signals associated with communication COMM and/or sensing SENS, e.g. in a full-duplex manner, or, for example, in a distributed half-duplex manner.

In some exemplary embodiments, the principle according to the embodiments can e.g. be used to provide at least one of the following aspects and options:
Aspect O1: See, for example, Fig. 10. In some exemplary embodiments, a common RF processing stage 130-1 may be provided and may e.g. be configured to integrate and/or to multiplex, e.g. analog, waveforms, e.g. a waveform for the communication COMM and a waveform for the sensing SENS. In some exemplary embodiments, the common RF processing stage 130-1 may be configured to raise both waveforms up to a respective carrier frequency (e.g., transforming the waveforms, for example, to an RF range, e.g. by upconverting), see, for example the blocks 210d, 212d of Fig. 9B. In some exemplary embodiments, the common RF processing stage 130-1 may be configured to mix (e.g., upconvert) both waveforms, e.g. for communication and sensing, up to two (or more) different frequencies, wherein for example each of the first waveform and the second waveform is associated with its own, e.g. individual, target frequency, e.g. in the RF range. In some exemplary embodiments, a multiplexing can e.g. be performed in time, e.g., for same frequency mixing of the first and second waveform, e.g. applying a time division multiplexing scheme to the first waveform and to the second waveform. In some exemplary embodiments, a multiplexing of the first waveform and the second waveform can e.g. be performed in a frequency dimension, e.g. upconverting the first waveform and the second waveform, e.g. to different RF signal ranges. In some exemplary embodiments, the control unit 140 can organize, e.g. control and/or orchestrate, at least some of the aforementioned aspects.
Aspect O2: See, for example, Fig. 11. In some exemplary embodiments, a common RF processing stage 130-1a is provided, which may e.g. comprise a common ADC/DAC module and/or an RF mixer, e.g. in the form of the processing units 130a, 130b, as explained above with respect to Fig. 11. As mentioned above, in some exemplary embodiments, one or more interfaces IF-4', IF-6', .. may be provided.

In some exemplary embodiments, both the ADC/DAC module and/or the RF module can e.g. be controlled, e.g. to multiplex waveforms associated with the communication COMM (e.g., the first waveform WF-1) and the sensing SENS (e.g., the second waveform WF-2), e.g. onto different resources, e.g. time and/or frequency resources. In some exemplary embodiments, however, e.g. the control unit 140 may organize and/or align signals associated with the sensing SENS and the communication COMM functionality, e.g. to be transmitted onto the same spectrum, e.g. frequency range, e.g. if the waveforms can be joined, e.g., if they are consuming different space/code resources and/or if they have e.g. been jointly super-imposed and/or if they have been designed to be joined, e.g. within the same frequency range.

Aspect O3-1: See, for example, Fig. 12. In some exemplary embodiments, a processing unit 130c configured to perform first physical layer functions FUN-PHY-1, e.g. lower physical layer functions such as e.g. Fast Fourier Transformation, for signals associated with at least one of the communication and the sensing, can be provided. In some exemplary embodiments, the processing unit 130c may thus e.g. be considered as a "shared FFT module". In some exemplary embodiments, the processing unit 130c, e.g. the shared FFT module, can be used to modulate a signal for the communication COMM and, e.g. at the same time, can be shared, e.g. with a component for the sensing SENS, e.g. sensing module, e.g. the second signal processing stage 120-1b, e.g. to accomplish sensing, e.g. OFDM-based sensing, e.g., OFDM based RADAR functionalities. In some exemplary embodiments, with Aspect 03-1, e.g. similar to Aspect O2, both RF and ADC/DAC modules 130a, 130b may also be shared, e.g. between the sensing SENS and the communication COMM. In some exemplary embodiments, the sharing of the modules or units 130a, 130b may e.g. relate to, e.g. comprise at least one of: a) using disjoint (e.g., disjoint, but aligned) functionalities, b) using commonly joint functionalities, for both sensing SENS and communication COMM. In some exemplary embodiments, at least some, for example all, components of the apparatus 100g, can e.g. be orchestrated by means of the optional control unit 140. In some exemplary embodiments, the optional control unit 140 may e.g. set and/or configure an FFT, e.g. for transmissions associated with the communication COMM, e.g., IFFT (inverse FFT) and/or cyclic prefix (CP) insertion, and/or reception, e.g., CP removal and FFT, and/or sensing SENS, e.g. using a RADAR technique and/or an OFDM modulated sensing or radar waveform. In some exemplary embodiments, the optional control unit 140 may e.g. be configured (e.g., by higher layers and/or by a network moderation entity (not shown)) to perform coordination among shared (joint/disjoint) components of the apparatus according to exemplary embodiments.

Aspect O3-2: see, for example, Fig. 13. In some exemplary embodiments, a higher layer split option (e.g., as compared to the configuration 100g of, e.g., Fig. 12), e.g., a MAC-low / MAC-high split option, is proposed, which may e.g. be implemented using the configuration 100h of Fig. 13. In some exemplary embodiments, a shared low-MAC module, e.g. implemented or comprised by the processing unit 130e, may support distributing a share related to sensing SENS and communication COMM, e.g. across available physical channel(s)/bearer(s). In some exemplary embodiments, a common or an optimized rate/channel capacity or occupancy split/share can be used, e.g. according to, e.g. based on, a desired QoS for respective flows of data (e.g., associated with the communication COMM), e.g. vs. a quality of the sensing (QoSe), e.g. for detection purposes. In some exemplary embodiments, a, for example higher, PHY protocol may be shared, e.g. also with at least some shared functionalities and or at least some specific functionalities for both communication COMM (e.g., data communication) and/or signaling and sensing SENS. As an example, in some exemplary embodiments, e.g., a transmission rate of RADAR pulses used for the sensing SENS may be adapted, e.g. based on a modulation and coding scheme, MCS, for signals used for the communication COMM.

In some exemplary embodiments, other distributions of individual and/or shared functionalities, e.g. with respect to signal processing of signals associated with the communication COMM and the sensing SENS, e.g. within the apparatus according to the embodiments, are also possible. In some exemplary embodiments, for some configurations, a different integration level as exemplarily symbolized by the illustrative embodiments explained above may be provided.

In some exemplary embodiments, the principle according to the embodiments can e.g. be used for, but is not limited to, automotive applications, e.g. for providing an, for example integrated, communication and sensing functionality, e.g. for cars.

In some exemplary embodiments, the principle according to the embodiments enables to, e.g. flexibly, split a protocol stack and/or related functionalities, enabling to provide flexible combined communication and sensing solutions, which in some exemplary embodiments can attain a comparatively high degree of integration.

In some exemplary embodiments, at least some aspects of the apparatus according to the embodiments may e.g. be provided in the form of at least one SoC or ASIC, wherein, according to different exemplary embodiments, different levels of integration are possible.

Some exemplary embodiments provide a, for example concrete, solution to a design for a SoC for joint and/or integrated communication COMM and sensing SENS, which can flexibly be used, e.g. with different types of antennas or antenna systems, such as, e.g. automotive and/or vehicular distributed antenna systems, DAS.

Some exemplary embodiments enable to provide a enable to provide a, for example generic, distributed integrated communication and sensing, e.g. with different possible integration levels and/or different possible protocol disaggregation strategies.

Some exemplary embodiments enable to provide a novel SoC design that includes different possible joint communication and sensing integration levels with a distributed antenna system.

## Claims

1. An apparatus (100; 100a; 100b; 100c; 100d; 100e; 100f; 100g; 100h; 100i; 100j; 100k; 100l; 100m) for processing signals, for example signals associated with at least one of communication (COMM) and sensing (SENS), the apparatus (100; 100a; 100b; 100c; 100d; 100e; 100f; 100g; 100h; 100i; 100j; 100k; 100l; 100m) comprising: a first signal processing stage (110) configured to process (200) signals (COMM-sig) associated with communication (COMM), a second signal processing stage (120) configured to process (202) signals (SENS-sig) associated with sensing (SENS), and at least one common radio frequency, RF, processing stage (130; 130-1, 130-2, ...) for processing (204) RF signals (RF-sig) associated with at least one of communication (COMM) and sensing (SENS).

2. The apparatus (100; 100a; 100b; 100c; 100d; 100e; 100f; 100g; 100h; 100i; 100j; 100k; 100l; 100m) according to claim 1, wherein the at least one common RF processing stage (110) is configured to process (204a) a) both first RF signals (RF-sig-1), which are associated with communication, and second RF signals (RF-sig-2), which are associated with sensing, and/or b) third RF signals (RF-sig-3), which are associated both with communication and sensing, wherein for example the at least one common RF processing stage (130; 130-1, 130-2, ...) is configured to process the first RF signals (RF-sig-1) and the second RF signals (RF-sig-2) in at least one of: A) an at least partly temporally overlapping fashion, for example simultaneously, B) in a time-multiplexed fashion, C) in a frequency-multiplexed fashion.

3. The apparatus (100; 100a; 100b; 100c; 100d; 100e; 100f; 100g; 100h; 100i; 100j; 100k; 100l; 100m) of any of the preceding claims, wherein the communication (COMM) comprises at least one of: a) vehicle-to-everything, V2X, communication (COMM-V2X), for example based on and/or compatible with at least one 3GPP standard of the fifth generation, 5G, or sixth generation, 6G, for example at least one of a1) vehicle-to-infrastructure, V2l, communication (COMM-V2I), a2) vehicle-to-network, V2N, communication (COMM-V2N), a3) vehicle-to-device, V2D, communication (COMM-V2D), a4) vehicle-to-pedestrian, V2P, communication (COMM-V2P).

4. The apparatus (100; 100a; 100b; 100c; 100d; 100e; 100f; 100g; 100h; 100i; 100j; 100k; 100l; 100m) of any of the preceding claims, wherein the sensing (SENS) comprises at least one of: a) determining (DET-LOC), e.g. estimating, a location of an object, b) determining (DET-VELOC), e.g. estimating, a velocity of an object, for example by using RADAR signals.

5. The apparatus (100; 100a; 100b; 100c; 100d; 100e; 100f; 100g; 100h; 100i; 100j; 100k; 100l; 100m) of any of the preceding claims, wherein at least two elements of the a) first signal processing stage (110), b) the second signal processing stage (120), the c) at least one common RF processing stage (130; 130-1, 130-2, ...) are arranged in a same first module (MOD-1; MOD-1'), for example within a same first system on chip (SOC-1; SOC-1').

6. The apparatus (100; 100a; 100b; 100c; 100d; 100e; 100f; 100g; 100h; 100i; 100j; 100k; 100l; 100m) of claim 5, wherein the first signal processing stage (110) and the second signal processing stage (120) are arranged in the same first module (MOD-1; MOD-1'), for example within the same first system on chip (SOC-1; SOC-1'), wherein, for example, the at least one common RF processing stage (130; 130-1, 130-2, ...) is arranged in a second module (MOD-2), for example target system (TS), wherein, for example, the second module (MOD-2), for example target system (TS), is different from the first module (MOD-1; MOD-1'), for example the first system on chip (SOC-1; SOC-1').

7. The apparatus (100; 100a; 100b; 100c; 100d; 100e; 100f; 100g; 100h; 100i; 100j; 100k; 100l; 100m) of any of the preceding claims, wherein more than one common RF processing stage (130-1, 130-2, ...) for processing RF signals associated with communication and sensing is provided.

8. The apparatus (100; 100a; 100b; 100c; 100d; 100e; 100f; 100g; 100h; 100i; 100j; 100k; 100l; 100m) of any of the preceding claims, comprising a control unit, for example orchestration unit, (140; 140') configured to at least temporarily control at least one component of at least one of: a) the first signal processing stage (110), b) the second signal processing stage (120), c) the at least one common RF processing stage (130; 130-1, 130-2, ...).

9. The apparatus (100; 100a; 100b; 100c; 100d; 100e; 100f; 100g; 100h; 100i; 100j; 100k; 100l; 100m) of any of the preceding claims, wherein the first signal processing stage (110) comprises at least one of: a) a, for example vehicle-to-everything, V2X, communication layer unit (110a) configured to process information (I-CP; I-UP) associated with at least one of a1) a control plane, for example a V2X communication control plane, a2) a user plane, for example a V2X communication user plane, b) a processing unit (110b) configured to process at least one of: b1) information (I-RRC) associated with a radio resource control, RRC, b2) information (I-NAS) associated with a non-access stratum, NAS, c) a processing unit (110c) configured to process information (I-D-UP) associated with data that is associated with a or the control plane, d) a processing unit (110d) configured to process information (I-PDCP) associated with a packet data convergence protocol, e) a processing unit (110e) configured to process information (I-RLC) associated with a radio link control, RLC, f) a processing unit (110f) configured to process information (I-MAC) associated with a medium access control, MAC, g) a processing unit (110g) configured to process information (I-PHY) associated with a physical layer, PHY, wherein, for example, the processing unit (110g) configured to process information (I-PHY) associated with the physical layer comprises at least one of: g1) a primary physical layer processing stage (110g-1) configured to perform higher physical layer functions, g2) a secondary physical layer processing stage (110g-2) configured to perform lower physical layer functions, e.g., with respect to the higher physical layer functions of the primary physical layer processing stage (110g-1), e.g. Fast Fourier Transforms, h) a processing unit (110h) configured to perform at least one of h1) analog-to-digital conversion, ADC, h2) digital-to-analog conversion, DAC.

10. The apparatus (100; 100a; 100b; 100c; 100d; 100e; 100f; 100g; 100h; 100i; 100j; 100k; 100l; 100m) of any of the preceding claims, wherein the second signal processing stage (120) comprises at least one of: a) a processing unit (120a) configured to perform at least one of a1) RADAR control (RAD-CTRL) and a2) target tracking (TRACK), b) a processing unit (120b) configured to perform at least one of b1) higher physical layer RADAR functions (RAD-PHY-HIGH), b2) RADAR transceiver functions (RAD-TRX), b3) RADAR timing control (RAD-TIM-CTRL), b4) RADAR detection (RAD-DETECT), c) a processing unit (120c) configured to perform lower physical layer RADAR functions (RAD-PHY-LOW), e.g., with respect to the higher physical layer RADAR functions (RAD-PHY-HIGH), d) a processing unit (120d) configured to perform at least one of d1) analog-to-digital conversion ADC', d2) digital-to-analog conversion DAC'.

11. The apparatus (100; 100a; 100b; 100c; 100d; 100e; 100f; 100g; 100h; 100i; 100j; 100k; 100l; 100m) of any of the preceding claims, wherein the at least one common RF processing stage (130; 130-1, 130-2, ...) comprises at least one of: a) a common RF processing unit (130a) configured to process a1) both first, e.g. the first, RF signals (RF-sig-1), which are associated with the communication (COMM), and second, e.g. the second, RF signals (RF-sig-2), which are associated with the sensing (SENS), and/or a2) third, e.g. the third, RF signals (RF-sig-3), which are associated both with the communication (COMM) and the sensing (SENS), b) a processing unit (130b) configured to perform at least one of b1) analog-to-digital conversion, ADC, of at least one analog signal (SIG-AN) associated with at least one of the communication (COMM) and the sensing (SENS), b2) digital-to-analog conversion, DAC, of at least one digital signal (SIG-DIG) associated with at least one of the communication (COMM) and the sensing (SENS), c) a processing unit (130c) configured to perform first physical layer functions (FUN-PHY-1), e.g. lower physical layer functions such as e.g. Fast Fourier Transformation, for signals associated with at least one of the communication (COMM) and the sensing (SENS), d) a processing unit (130d) configured to perform physical layer functions (FUN-PHY-2), e.g. higher physical layer functions, e.g. as compared to the lower physical layer functions, for signals associated with at least one of the communication (COMM) and the sensing (SENS), e) a processing unit (130e) configured to perform medium access layer functions (FUN-MAC), e.g. lower medium access layer functions, for signals associated with at least one of the communication (COMM) and the sensing (SENS).

12. The apparatus (100; 100a; 100b; 100c; 100d; 100e; 100f; 100g; 100h; 100i; 100j; 100k; 100l; 100m) of any of the preceding claims, wherein the apparatus (100; 100a; 100b; 100c; 100d; 100e; 100f; 100g; 100h; 100i; 100j; 100k; 100l; 100m) is configured to process (210) a first signal, e.g. waveform, (WF-1), for the communication (COMM), wherein for example the first signal (WF-1) is dedicated for the communication (COMM), wherein for example processing (210) the first signal (WF-1) comprises at least one of: a) generating (210a) the first signal (WF-1), b) transmitting (210b) the first signal (WF-1), c) receiving (210c) the first signal (WF-1), d) upconverting (210d) the first signal (WF-1) from a first frequency range to a second frequency range, e) downconverting (210e) the first signal (WF-1) from a third frequency range to a fourth frequency range, f) modulating (210f) the first signal (WF-1), g) demodulating (210g) the first signal (WF-1).

13. The apparatus (100; 100a; 100b; 100c; 100d; 100e; 100f; 100g; 100h; 100i; 100j; 100k; 100l; 100m) of any of the preceding claims, wherein the apparatus (100; 100a; 100b; 100c; 100d; 100e; 100f; 100g; 100h; 100i; 100j; 100k; 100l; 100m) is configured to process (212) a second signal, e.g. waveform, (WF-2), for the sensing (SENS), wherein for example the second signal (WF-2) is dedicated for the sensing (SENS), wherein for example the second signal (WF-2) is different from a or the first signal (WF-1) for the communication (COMM), wherein for example processing (212) the second signal (WF-2) comprises at least one of: a) generating (212a) the second signal (WF-2), b) transmitting (212b) the second signal (WF-2), c) receiving (212c) the second signal (WF-2), d) upconverting (212d) the second signal (WF-2) from a fifth frequency range to a sixth frequency range, e) downconverting (212e) the second signal (WF-2) from a seventh frequency range to an eighth frequency range, f) modulating (212f) the second signal (WF-2), g) demodulating (212g) the second signal (WF-2).

14. The apparatus (100; 100a; 100b; 100c; 100d; 100e; 100f; 100g; 100h; 100i; 100j; 100k; 100l; 100m) of any of the preceding claims, wherein the apparatus (100; 100a; 100b; 100c; 100d; 100e; 100f; 100g; 100h; 100i; 100j; 100k; 100l; 100m) is configured to process (214) a third signal, e.g. waveform, (WF-3), wherein for example at least a portion of the third signal (WF-3) is usable both for the communication (COMM) and for the sensing (SENS), wherein for example processing (214) the third signal (WF-3) comprises at least one of: a) generating (214a) the third signal (WF-3), b) transmitting (214b) the third signal (WF-3), c) receiving (214c) the third signal (WF-3), d) upconverting (214d) the third signal (WF-3) from a ninth frequency range to a tenth frequency range, e) downconverting (214e) the third signal (WF-3) from an eleventh frequency range to a twelfth frequency range, f) modulating (214f) the third signal (WF-3), g) demodulating (214g) the third signal (WF-3).

15. The apparatus (100; 100a; 100b; 100c; 100d; 100e; 100f; 100g; 100h; 100i; 100j; 100k; 100l; 100m) of any of the preceding claims, wherein at least one component of the apparatus (100; 100a; 100b; 100c; 100d; 100e; 100f; 100g; 100h; 100i; 100j; 100k; 100l; 100m), for example the at least one common RF processing stage (130; 130-1, 130-2, ...), is configured to process (220) signals associated with at least one of the communication (COMM) and the sensing (SENS) in a full duplex mode, wherein for example a plurality of common RF processing stages (130; 130-1, 130-2, ...) is provided, and wherein for example at least some, for example all, common RF processing stages (130; 130-1, 130-2, ...) of the plurality of common RF processing stages (130; 130-1, 130-2, ...) are configured to process (220a) the signals associated with at least one of the communication (COMM) and the sensing (SENS) in a full duplex mode.

16. The apparatus (100; 100a; 100b; 100c; 100d; 100e; 100f; 100g; 100h; 100i; 100j; 100k; 100l; 100m) of any of the claims 12 to 15, wherein at least a first common RF processing stage (130-1) and a second common RF processing stage (130-2) is provided, wherein for example the first common RF processing stage (130-1) is configured to transmit (222) at least one transmission signal (sig-tx) associated with at least one of the first signal (WF-1) and the second signal (WF-2), wherein for example the second common RF processing stage (130-2) is configured to receive (224) at least one receive signal (sig-rx) associated with, e.g. characterizing, a reflected signal portion of the transmission signal (sig-tx) associated with the second signal (WF-2).

17. The apparatus (100; 100a; 100b; 100c; 100d; 100e; 100f; 100g; 100h; 100i; 100j; 100k; 100l; 100m) of any of the preceding claims, wherein the at least one common RF processing stage (130; 130-1, 130-2, ...) comprises at least one, for example digital, interface (IF-dig), wherein for example the at least one digital interface (IF-dig) is configured for a data exchange between the at least one common RF processing stage (130; 130-1, 130-2, ...) and at least one of a) the first signal processing stage (110), b) the second signal processing stage (120), c) a or the control unit (140; 140').

18. Module (MOD-1; MOD-1') for processing signals, for example signals associated with at least one of communication (COMM) and sensing (SENS), comprising at least some components (110, 120; 110, 120, 140; 110, 120, 130, 140) of the apparatus (100; 100a; 100b; 100c; 100d; 100e; 100f; 100g; 100h; 100i; 100j; 100k; 100l; 100m) of any of the preceding claims, wherein for example the module (MOD-1; MOD-1') is a system on chip, SoC.

19. A method of processing signals, for example signals associated with at least one of communication (COMM) and sensing (SENS), for example for use with the apparatus (100; 100a; 100b; 100c; 100d; 100e; 100f; 100g; 100h; 100i; 100j; 100k; 100l; 100m) of any of the claims 1 to 17, comprising: processing (200), by means of a first signal processing stage (110), signals (COMM-sig) associated with communication (COMM), processing (202), by means of a second signal processing stage (120), signals (SENS-sig) associated with sensing (SENS), and processing (204), by means of at least one common radio frequency, RF, processing stage (130; 130-1, 130-2, ...), RF signals associated with at least one of communication (COMM) and sensing (SENS).

20. The method of claim 19, comprising at least one of: A) processing (210) a first signal, e.g. waveform, (WF-1), for the communication (COMM), wherein for example the first signal (WF-1) is dedicated for the communication (COMM), wherein for example processing (210) the first signal (WF-1) comprises at least one of: Aa) generating (210a) the first signal (WF-1), Ab) transmitting (210b) the first signal (WF-1), Ac) receiving (210c) the first signal (WF-1), Ad) upconverting (210d) the first signal (WF-1) from a first frequency range to a second frequency range, Ae) downconverting (210e) the first signal (WF-1) from a third frequency range to a fourth frequency range, Af) modulating (210f) the first signal (WF-1), Ag) demodulating (210g) the first signal (WF-1), B) processing (212) a second signal, e.g. waveform, (WF-2), for the sensing (SENS), wherein for example the second signal (WF-2) is dedicated for the sensing (SENS), wherein for example the second signal (WF-2) is different from the first signal (WF-1) for the communication (COMM), wherein for example processing (212) the second signal (WF-2) comprises at least one of: Ba) generating (212a) the second signal (WF-2), Bb) transmitting (212b) the second signal (WF-2), Bc) receiving (212c) the second signal (WF-2), Bd) upconverting (212d) the second signal (WF-2) from a fifth frequency range to a sixth frequency range, Be) downconverting (212e) the second signal (WF-2) from a seventh frequency range to an eighth frequency range, Bf) modulating (212f) the second signal (WF-2), Bg) demodulating (212g) the second signal (WF-2), C) processing (214) a third signal, e.g. waveform, (WF-3), wherein for example at least a portion of the third signal (WF-3) is usable both for the communication (COMM) and for the sensing (SENS), wherein for example processing (214) the third signal (WF-3) comprises at least one of: Ca) generating (214a) the third signal (WF-3), Cb) transmitting (214b) the third signal (WF-3), Cc) receiving (214c) the third signal (WF-3), Cd) upconverting (214d) the third signal (WF-3) from a ninth frequency range to a tenth frequency range, Ce) downconverting (214e) the third signal (WF-3) from an eleventh frequency range to a twelfth frequency range, Cf) modulating (214f) the third signal (WF-3), Cg) demodulating (214g) the third signal (WF-3).

21. The method of any of the claims 19 to 20, comprising processing (220a) signals associated with at least one of the communication (COMM) and the sensing (SENS) in a full duplex mode.

22. The method of any of the claims 19 to 21, wherein at least a first common RF processing stage (130-1) and a second common RF processing stage (130-2) is provided, wherein the method comprises: transmitting (222), by the first common RF processing stage (130-1), at least one transmission signal (sig-tx) associated with at least one of the first signal (WF-1) and the second signal (WF-2), receiving (224), by the second common RF processing stage (130-2), at least one receive signal (sig-rx) associated with, e.g. characterizing, a reflected signal portion of the transmission signal (sig-tx) associated with the second signal (WF-2).

23. The method of any of the claims 19 to 22, comprising: providing (230) a, for example central, primary unit (UN-1), which comprises at least the first signal processing stage (110) and the second signal processing stage (120) and, optionally, a or the control unit (140; 140'), providing (232) at least one, for example distributed, secondary unit (UN-2; UN-2a, UN-2b, ...) which comprises the at least one common radio frequency, RF, processing stage (130; 130-1, 130-2, ...).

24. A vehicle (20; 20') comprising at least one apparatus (100; 100a; 100b; 100c; 100d; 100e; 100f; 100g; 100h; 100i; 100j; 100k; 100l; 100m) according any of the claims 1 to 17.

25. A use (400) of the apparatus (100; 100a; 100b; 100c; 100d; 100e; 100f; 100g; 100h; 100i; 100j; 100k; 100l; 100m) according to any of the claims 1 to 17 and/or of the module according to claim 18 and/or of the method according to any of the claims 19 to 23 and/or of the vehicle (20; 20') according to claim 24 for at least one of: a) processing (401) RF signals associated with at least one of communication (COMM) and sensing (SENS) by means of the at least one common radio frequency, RF, processing stage (130; 130-1, 130-2, ...), b) providing (402) joint, for example integrated, communication (COMM) and sensing (SENS), c) splitting (403) a respective protocol stack, for example a lower protocol stack, for communication (COMM) and sensing (SENS), d) controlling, e.g. commonly controlling, e.g. orchestrating, (404) communication (COMM) and sensing (SENS), e) sharing (405) an analog interface associated with the at least one common RF, processing stage between communication (COMM) and sensing (SENS).
